Europäisches Patentamt

(19) European Patent Office

Office européen des brevets

(11) Numéro de publication: **0 252 566 B1**

# FASCICULE DE BREVET EUROPEEN

(45) Date de publication de fascicule du brevet:
24.04.91

(51) Int. Cl.⁵: **G01T 1/164**

(21) Numéro de dépôt: **87201285.1**

(22) Date de dépôt: **07.07.87**

(54) Caméra à scintillation.

(30) Priorité: **09.07.86 FR 8609986**
**16.07.86 FR 8610326**

(43) Date de publication de la demande:
**13.01.88 Bulletin 88/02**

(45) Mention de la délivrance du brevet:
**24.04.91 Bulletin 91/17**

(84) Etats contractants désignés:
**BE DE FR GB IT NL SE**

(56) Documents cités:
**EP-A- 0 166 165**
**FR-A- 2 552 233**
**FR-A- 2 569 013**
**FR-A- 2 570 507**
**US-A- 4 151 416**

(73) Titulaire: **LABORATOIRES D'ELECTRONIQUE PHILIPS**
**3, Avenue Descartes**
**F-94450 Limeil-Brévannes(FR)FR**

Titulaire: **N.V. Philips' Gloeilampenfabrieken**
**Groenewoudseweg 1**
**NL-5621 BA Eindhoven(NL)BE DE GB IT NL SE**

(72) Inventeur: **Jatteau, Michel Société Civile S.P.I.D.**
**209, rue de l'Université**
**F-75007 Paris(FR)**
Inventeur: **Lelong, Pierre Société Civile S.P.I.D.**
**209, rue de l'Université**
**F-75007 Paris(FR)**
Inventeur: **Pauzat, Vincent Société Civile S.P.I.D.**
**209, rue de l'Université**
**F-75007 Paris(FR)**
Inventeur: **Plard, Christian Société Civile S.P.I.D.**
**209, rue de l'Université**
**F-75007 Paris(FR)**

(74) Mandataire: **Landousy, Christian et al**
**Société Civile S.P.I.D. 156, Boulevard Haussmann**
**F-75008 Paris(FR)**

## Description

La présente invention concerne une caméra à scintillation comprenant un cristal scintillateur éventuellement équipé d'un collimateur et destiné à convertir chaque photon reçu en une scintillation, un guide de lumière pour le couplage dudit cristal à la fenêtre d'entrée d'un jeu de photodétecteurs destinés à convertir en courant chaque scintillation, p voies d'acquisition recevant les signaux de sortie desdits photodétecteurs et délivrant p signaux électriques de caractéristiques liées notamment à l'intensité de la scintillation et à la distance de cette scintillation à chacun des photodétecteurs, et un calculateur destiné à délivrer les coordonnées $x_j$ et $y_j$ d'une scintillation j et l'énergie $E_j$ qui est associée à cet événement j.

Pour déterminer l'image de fixations radioactives à l'intérieur d'un organe, la médecine fait appel, entre autres moyens, au principe de la scintigraphie. Ce principe consiste à introduire dans l'organisme d'un patient un élément radioactif qui va se fixer plus ou moins sur certains organes selon que ceux-ci sont sains ou malades. La mesure de l'intensité de rayonnement gamma émis fournit alors une indication sur la répartition de l'élément radioactif dans l'organisme et constitue donc une aide au diagnostic. Une telle mesure est réalisée à l'aide d'une caméra à scintillation.

Dans les caméras à scintillation traditionnelles, par exemple de type Anger (le physicien Anger étant le premier à avoir proposé une caméra à scintillation, dont les principes fondamentaux sont décrits dans le brevet des Etats-Unis d'Amérique n° 3011057), les rayons gamma représentatifs de la distribution radioactive dans le milieu examiné pénètrent, après traversée d'un collimateur, dans un cristal scintillateur. Les scintillations qui se produisent dans ce cristal sont alors détectées par l'intermédiaire de toute une série de tubes photomultiplicateurs (par exemple 37), après traversée d'un guide de lumière assurant un couplage optique entre le cristal et les tubes. Ces tubes sont répartis devant le bloc optique (cristal + guide de lumière) pour couvrir pratiquement toute sa surface et transformer l'énergie lumineuse de chaque scintillation apparue en un signal électrique mesurable.

A chaque tube photomultiplicateur est alors associée une voie d'acquisition analogique opérant successivement une amplification, une intégration et une mise en forme des signaux fournis par le tube. Les sorties $S_{ij}$ de l'ensemble des voies d'acquisition sont envoyées vers un calculateur qui fournit par estimation les coordonnées $x_j$ et $y_j$ d'une scintillation j et son énergie $E_j$ (l'indice i désigne celle des voies d'acquisition qui est concernée). Dans le calculateur, plusieurs types de dispositifs de calcul peuvent être prévus, mais deux d'entre eux essentiellement sont réellement utilisés, à savoir un dispositif de calcul barycentrique à rapport arithmétique, ou un dispositif de calcul barycentrique à rapport logarithmique.

Dans un dispositif de calcul barycentrique à rapport arithmétique, les grandeurs $x_j$, $y_j$, $E_j$ sont données par les expressions :

$$x_j = \frac{X_j}{Z_j} \qquad (1)$$

$$y_j = \frac{Y_j}{Z_j} \qquad (2)$$

$$E_j = \sum_{i=1}^{i=p} G_i \, S_{ij} \qquad (3)$$

Dans ces expressions, on a :

$$X_j = \sum_{i=1}^{i=p} K_i \, S_{ij} \qquad (4)$$

$$Y_j = \sum_{i=1}^{i=p} H_i \, S_{ij} \qquad (5)$$

$$Z_j = \sum_{i=1}^{i=p} J_i \, S_{ij} \qquad (6)$$

les coefficients $G_i$, $K_i$, $H_i$, $J_i$ étant des facteurs de pondération liés à la position de l'axe de chacun des p

2

tubes photomultiplicateurs.

Dans un dispositif de calcul barycentrique à rapport logarithmique, les grandeurs $x_j$, $y_j$, $E_j$ sont cette fois données par les expressions :

$$x_j = \frac{1}{a} \text{Log} \frac{X_j^+}{X_j^-} \qquad (7)$$

$$y_j = \frac{1}{a} \text{Log} \frac{Y_j^+}{Y_j^-} \qquad (8)$$

$$E_j = \sum_{i=1}^{i=p} G_i \, S_{ij} \qquad (9)$$

$$\text{avec :} \qquad X_j^+ = \sum_{i=1}^{i=p} K_i^+ \, S_{ij} \qquad (10)$$

$$X_j^- = \sum_{i=1}^{i=p} K_i^- \, S_{ij} \qquad (11)$$

$$Y_j^+ = \sum_{i=1}^{i=p} H_i^+ \, S_{ij} \qquad (12)$$

$$Y_j^- = \sum_{i=1}^{i=p} H_i^- \, S_{ij} \qquad (13)$$

Les facteurs de pondération sont également liés à la position de l'axe de chacun des p tubes photomultiplicateurs.

Dans l'un ou l'autre cas, quelle que soit l'arithmétique utilisée, les caméras à scintillation actuelles comprennent en général des dispositifs de calcul de sommes pondérées qui utilisent des réseaux de résistances auxquels sont associés des amplificateurs sommateurs. Dans des caméras de ce type, il n'est pas possible d'effectuer les calculs relatifs à un événement (une scintillation) avant que les signaux correspondant à l'événement précédent n'aient été ramenés à zéro, ce qui fixe la vitesse de comptage maximale. Pour accroître cette vitesse de comptage, on a proposé diverses solutions, prévoyant par exemple de réduire au moyen de circuits analogiques la durée des signaux électriques ou le temps d'intégration. Cette réduction n'était cependant obtenue qu'au détriment de certaines caractéristiques intrinsèques des caméras, en particulier les résolutions spatiale et spectrale.

La demanderesse a proposé dans une précédente demande de brevet français FR-A-2 552 233 un dispositif numérique de mesure de radiations évitant la nécessité d'un retour complet à zéro des signaux électriques avant toute nouvelle mesure, c'est-à-dire acceptant un empilement partiel des événements détectés (et donc des signaux électriques, ou impulsions, qui leur correspondent).

Le but de l'invention est de proposer une nouvelle caméra à scintillation incorporant certains éléments de ce dispositif mais disposés en partie dans les p voies d'acquisition, en partie au sein du calculateur, et selon une architecture électronique simplifiée permettant de réaliser la conversion analogique-numérique des signaux suivie de leur intégration numérique à partir de convertisseurs de moindre précision et donc très peu coûteux. Cette architecture permet également d'effectuer les calculs de désempilement au moyen d'un nombre limité de circuits de traitement.

A cet effet l'invention concerne une caméra à scintillation caractérisée :

(A) en ce que lesdites p voies d'acquisition réalisent l'amplification, le filtrage et l'échantillonnage desdits signaux de sortie des photodétecteurs, puis la conversion analogique-numérique des échantillons obtenus et leur sommation, et délivrent p signaux numériques à l'entrée du calculateur ;

(B) en ce que le calculateur comprend lui-même :

(a) un bus de transfert desdits p signaux numériques ;

(b) un étage de sommation numérique comprenant quatre dispositifs de sommation pondérée numérique qui délivrent à partir des signaux de sortie des p voies d'acquisition quatre signaux

numériques $X_m$, $Y_m$, $Z_m$, $E_m$ ;

(c) un étage de traitement des événements incluant des circuits de calcul de désempilement de deux diviseurs et délivrant à partir des signaux $X_m$, $Y_m$, $Z_m$, $E_m$ les trois signaux de coordonnées et d'énergie x, y, E;

(C) en ce qu'un étage de détection, séquencement et stockage recevant un signal qui correspond à la somme des p signaux de sortie des photodétecteurs est prévu pour délivrer d'une part les différents signaux d'horloge pour la synchronisation des éléments des p voies d'acquisition et des éléments du calculateur et d'autre part des coefficients de correction destinés à l'étage de traitement de événements.

La demande de brevet européen n° 0166169, par exemple, décrit une caméra à scintillation ne réalisant la conversion analogique-numérique que dans le calculateur, ce qui conduit notamment à utiliser des composants de grande précision et donc considérablement plus coûteux, actuellement dans un rapport de 1 à 100 au moins.

Dans la structure de caméra à scintillation selon l'invention, définie ci-dessus, ou dans l'une ou l'autre des variantes de caméras à scintillation mentionnées dans la suite de la description, un mode de réalisation particulièrement avantageux des dispositifs de sommation pondérée numérique peut être proposé. Chacun desdits dispositifs comprend alors en série un premier circuit de mise en forme recevant séquentiellement les signaux numériques dont on veut effectuer une somme pondérée, un circuit de traitement, un multiplieur numérique recevant sur sa première entrée la sortie dudit circuit de traitement, un additionneur-accumulateur des signaux de sortie successifs dudit multiplieur numérique, et un deuxième circuit de mise en forme destiné à délivrer les signaux de sortie du dispositif de sommation pondérée numérique, le circuit de traitement étant commandé par le signal d'horloge qui fixe la cadence de présentation des signaux numériques à l'entrée de dispositif, un registre numérique étant associé audit circuit de traitement pour lui fournir une valeur de seuil éventuellement modifiable, et ledit multiplieur numérique recevant sur une deuxième entrée la sortie d'une mémoire numérique destinée à délivrer les coefficients de pondération à affecter auxdits signaux numériques. Cette mémoire peut être de type ROM, les coefficients sont alors fixés une fois pour toutes, ou par exemple de type RAM, et les coefficients peuvent alors être modifiés, par l'intermédiaire d'un circuit additionnel câblé ou microprogrammé.

Les particularités et avantages de l'invention apparaîtront maintenant de façon plus précise dans la description qui suit et dans les desssins annexés, donnés à titre d'exemples non limitatifs et dans lesquels :

- les figures 1 et 2 montrent les schémas de principe d'une caméra à scintillation selon l'état de la technique et selon l'invention respectivement ;
- la figure 3 montre un exemple de réalisation du dispositif de conversion et d'intégration de chacune des p voies d'acquisition ;
- la figure 4 montre un premier mode de réalisation du calculateur d'une caméra à scintillation conforme à l'invention ;
- les figures 5a à 5c montrent respectivement les signaux individuels correspondant à des scintillations rapprochées entraînant un empilement partiel, le signal global résultant de cet empilement, et la forme du signal représentant la valeur mesurée qui résulte de la sommation des échantillons pendant l'intervalle de temps $\theta_{j,j+1}$ pour la voie i (cette valeur étant mesurée à l'instant $t_{o,j+1}$ ;
- la figure 6 montre un exemple de réalisation d'un des circuits de calcul de désempilement de l'étage de traitement des événements ;
- la figure 7 montre un exemple de réalisation de l'étage de détection, séquencement et stockage ;
- la figure 8 montre une variante de réalisation des circuits de calcul de désempilement tels que celui de la figure 6 ;
- la figure 9 montre un deuxième mode de réalisation du calculateur d'une caméra à scintillation conforme à l'invention, incluant la variante de réalisation du circuit de calcul de désempilement représentée sur la figure 8 ;
- la figure 10 montre un troisième mode de réalisation du calculateur d'une caméra à scintillation conforme à l'invention, incluant un troisième mode de réalisation de l'étage de traitement des événements ;
- les figures 11 à 13 et 14 à 16 montrent, en correspondance aux figures 4, 9, 10, les modifications du calculateur lorsqu'on n'utilise plus que trois voies de calcul X, Y, Z ou X, Y, E respectivement ;
- la figure 17 montre un exemple de réalisation particulier de chaque dispositif de sommation pondérée numérique de l'étage de sommation numérique ;
- la figure 18 montre la forme de différents signaux présents en divers points du dispositif de la figure 17.

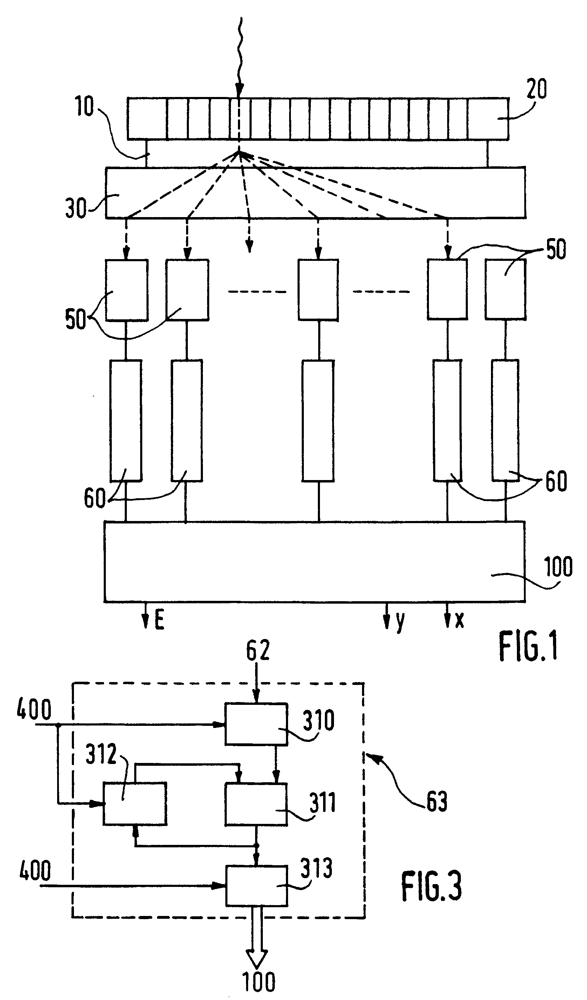

La caméra à scintillation de type classique représentée sur la figure 1 comprend un cristal scintillateur 10 équipé d'un collimateur 20 et destiné à convertir chaque photon reçu en une scintillation. Ce cristal est couplé par l'intermédiaire d'un guide de lumière 30 à la fenêtre d'entrée d'un jeu de p photodétecteurs constitué ici par des tubes photomultiplicateurs 50. Ces tubes 50 convertissent chaque scintillation en un courant qui est alors traité par p voies d'acquisition 60 entièrement analogiques. Ces voies d'acquisition 60 réalisent notamment l'amplification, le filtrage, l'intégration et la mise en forme des signaux de sortie des tubes photomultiplicateurs 50, et sont suivies d'un calculateur 100 fournissant les coordonnées $x_j$, $y_j$ et l'énergie $E_j$.

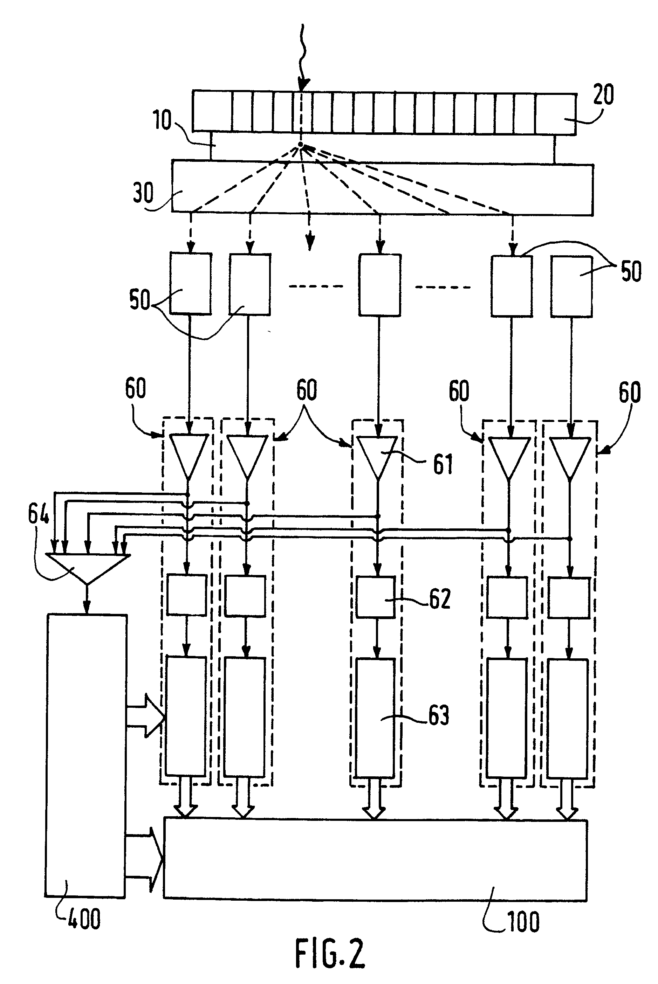

Selon le mode de réalisation qui va être maintenant plus particulièrement décrit, en correspondance à la figure 2 montrant par rapport à la figure 1 les modifications du schéma de principe pour une caméra selon l'invention, les p voies d'acquisition 60 sont non plus totalement analogiques comme dans les caméras classiques, mais elles fournissent p signaux numériques $M_{i,j}$ (i = indice variant de 1 à p) à l'entrée du calculateur 100. Ces p voies réalisent maintenant successivement l'amplification, le filtrage et l'échantillonnage des signaux de sortie des tubes photomultiplicateurs 50 puis la conversion analogique-numérique des échantillons obtenus et la sommation de ces échantillons numériques. La valeur de ces p signaux numériques est liée à celle du courant de sortie des tubes 50 et donc à une fraction de l'intensité de la scintillation initiale, mais différemment selon le taux d'empilement des scintillations (cette fraction est elle-même liée à la réalisation du bloc optique et en particulier à la distance entre le point de scintillation et l'axe des tubes). S'il n'y avait pas d'empilement, la valeur de chacun de ces signaux serait notée $S_{i,j}$ ; l'estimation de ces valeurs en présence d'empilement sera notée $\hat{S}_{i,j}$.

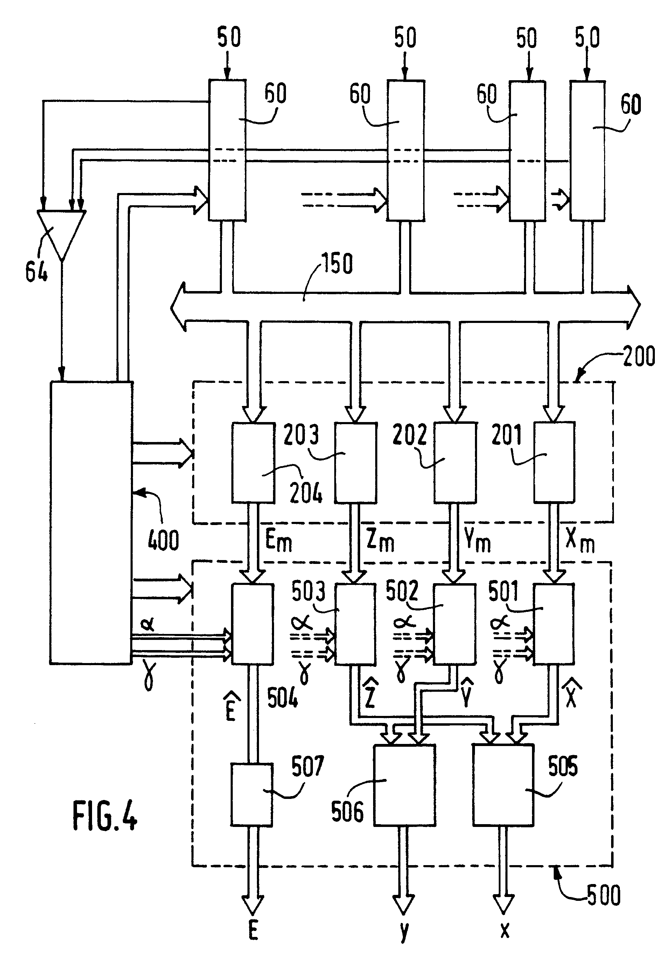

Chacune de ces p voies comprend donc en série, pour réaliser les fonctions citées ci-dessus, un circuit 61 d'amplification et de filtrage recevant la sortie du tube 50 correspondant, un circuit de réalignement temporel 62, puis un dispositif de conversion et d'intégration 63 assurant successivement l'échantillonnage des signaux de sortie du circuit 62 correspondant, la conversion analogique-numérique des échantillons obtenus et la sommation de ceux-ci. Il est en outre prévu un amplificateur analogique de sommation 64 dont les p entrées reçoivent les p sorties des circuits d'amplification et de filtrage 61 et dont la sortie est fournie à un détecteur de début d'impulsion localisé dans l'étage de détection, séquencement et stockage 400 décrit plus loin. La sortie de chacun des p dispositifs de conversion et d'intégration est envoyée vers le calculateur 100, éventuellement par l'intermédiaire de p mémoires dites FIFO (de l'anglais "First-In, First-Out") permettant de travailler ultérieurement à des fréquences plus faibles en régularisant le débit des événements. Cette disposition de mémoires FIFO permet en effet une réduction de la vitesse des calculs ultérieurs et le rythme plus lent ainsi obtenu peut être pratiquement égal au rythme moyen d'arrivée des événements (par exemple 2 microsecondes pour un rythme moyen de 500,000 événements par seconde) et non plus au rythme aléatoire d'arrivée des événements (environ 0,2 microseconde dans l'exemple précédent). Chacun des dispositifs de conversion et d'intégration 63 est ici équivalent à celui décrit dans la demande de brevet français FR-A-2 552 233 et comprend dans ce cas, selon l'exemple de réalisation de la figure 3, un circuit d'échantillonnage et de conversion analogique-numérique 310 suivi d'un additionneur 311. A la suite de cet additionneur 311 sont à leur tour prévus un premier registre 312 de stockage de la sortie de l'additionneur, dont la sortie est renvoyée vers une deuxième entrée de cet additionneur, et un deuxième registre 313 de stockage de la sortie de l'additionneur, dont la sortie est celle du dispositif de conversion et d'intégration qui réalise ainsi une addition cumulative et une mémorisation correspondante au fur et à mesure de l'arrivée des échantillons. Ces opérations s'effectuent sous le contrôle de l'étage de détection, séquencement et stockage 400 qui sera décrit plus loin.

Le calculateur 100 recevant les p sorties des voies d'acquisition compend lui-même différents dispositifs de calcul qui vont permettre de déterminer distinctement les coordonnées $x_j$, $y_j$ et l'énergie $E_j$ de toute scintillation j, soit à l'aide des relations (1) à (6) dans le cas d'un dispositif de calcul barycentrique à rapport arithmétique soit à l'aide des relations (7) à (13) dans le cas d'un dispositif de calcul barycentrique à rapport logarithmique.

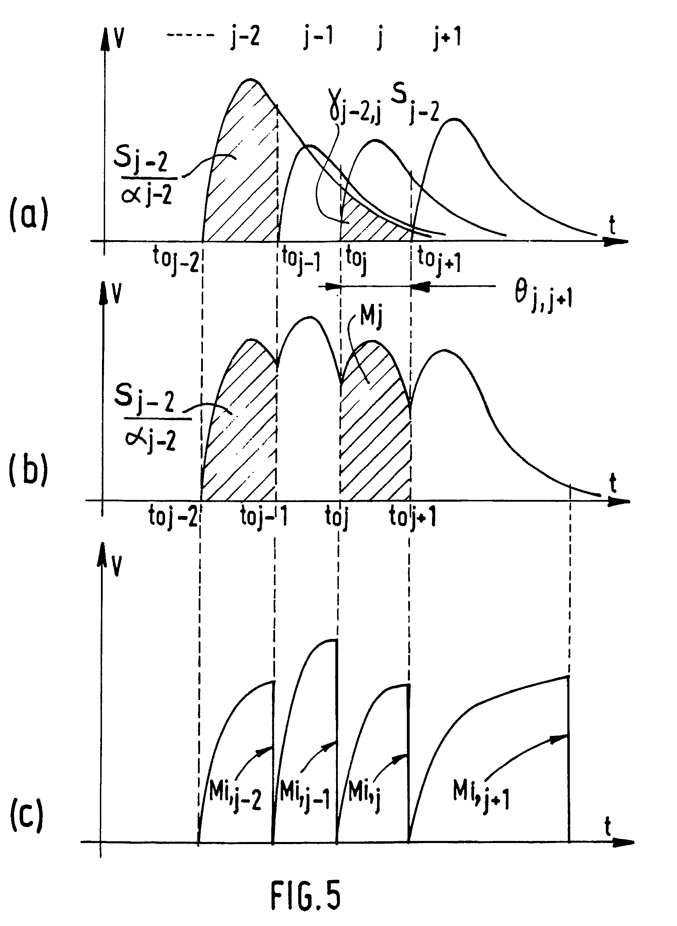

Plus précisément, ce calculateur 100, représenté sur la figure 4 dans le cas d'un dispositif de calcul barycentrique à rapport arithmétique, est agencé de la façon suivante. Il comprend tout d'abord un bus de transfert 150 des signaux numériques $M_{i,j}$ disponibles en sortie des p voies d'acquisition. Si, pour l'une de ces voies, par exemple la voie i, on représente les signaux analogiques individuels associés à plusieurs scintillations rapprochées dans le temps (figure 5a) et le signal résultant de l'empilement de ces signaux individuels (figure 5b), on constate que l'événement j est perturbé en amont par plusieurs événements j-1, j-2, etc... Si $\alpha_j$ et $\gamma_{k,j}$ sont des coefficients de correction respectivement par extrapolation et par interpolation qui peuvent être déterminés à partir de la connaissance de la forme moyenne, en fonction du temps, des impulsions correspondant à un événement détecté et à partir de la mesure de la durée $\theta_{j,j+1}$ comprise entre $t_{o,j}$ et $t_{o,j+1}$, si k est successivement égal à j-1, j-2,..., j-q, et si les signaux $\hat{S}_{ik}$ représentent pour ces valeurs respectives de k les valeurs corrigées des effets d'empilement qui seraient fournies par la voie d'acquisition numérique i en réponse aux scintillations j-1, j-2,..., j-q, alors les signaux numériques obtenus en sortie des

EP 0 252 566 B1

voies d'acquisition sont de la forme :

$$M_{i,j} = \frac{\hat{S}_{i,j}}{\alpha_j} + \sum_{k=j-1}^{k=j-q} \gamma_{k,j} \, \hat{S}_{i,k} \qquad (14)$$

où $M_{i,j}$ représente la valeur mesurée à l'instant $t_{o,j+1}$ résultant de la sommation des échantillons pendant l'intervalle de temps $\theta_{j,j+1}$ pour la voie i. La forme du signal $M_{i,j}$ est représentée sur la figure 5c.

Le calculateur comprend ensuite, en sortie du bus de transfert 150, un étage de sommation numérique 200 composé lui-même, comme indiqué sur la figure 4, de quatre dispositifs de sommation pondérée numérique 201 à 204. Ces quatre dispositifs 201 à 204 réalisent respectivement les sommations pondérées suivantes :

$$X_{m,j} = \sum_i K_i \, M_{ij} \qquad (15)$$

$$Y_{m,j} = \sum_i H_i \, M_{ij} \qquad (16)$$

$$Z_{m,j} = \sum_i J_i \, M_{ij} \qquad (17)$$

$$E_{m,j} = \sum_i G_i \, M_{ij} \qquad (18)$$

les coefficients $K_i$, $H_i$, $J_i$, $G_i$ étant l'expression numérique des facteurs de pondération définis en rapport avec les expressions (3) à (6) (pour un dispositif de calcul barycentrique à rapport arithmétique). Chacun de ces dispositifs de sommation pondérée numérique est par exemple du type du multiplieur-accumulateur TDC 1009 (commercialisé par la société TRW, La Jolla, CA 92038, USA), dont l'une des entrées reçoit la sortie correspondante du bus 150 et dont l'autre reçoit les coefficients de pondération sous forme numérique, stockés dans une mémoire auxiliaire. Dans le cas où l'on utilise effectivement ce type de multiplieur-accumulateur, ladite mémoire auxiliaire, qui doit être synchronisée avec le fonctionnement d'ensemble du calculateur, peut être par exemple incorporée à l'étage de détection, séquencement et stockage 400 décrit plus loin.

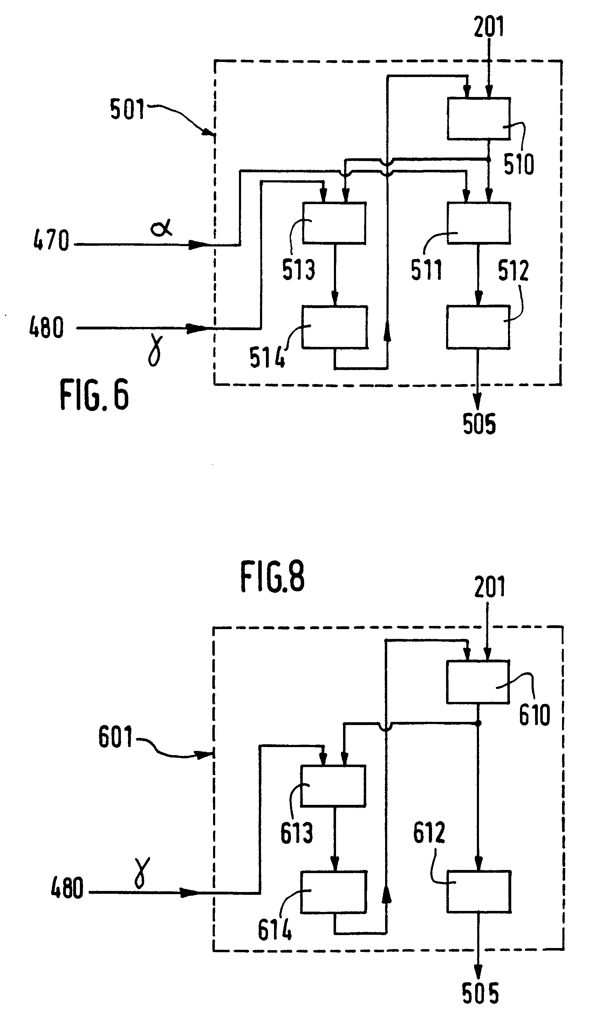

Les signaux de sortie $X_m$, $Y_m$, $Z_m$, $E_m$ de sortie de l'étage de sommation numérique 200 sont alors fournis à un étage de traitement des événements 500. Cet étage 500 comprend, comme indiqué sur la figure 4, quatre circuits de calcul de désempilement 501 à 504, deux diviseurs 505 et 506 et un circuit de réalignement temporel 507. Les quatre circuits 501 à 504 étant identiques, on ne décrit ici que l'un d'eux, par exemple le circuit 501. Celui-ci, représenté sur la figure 6, comprend un soustracteur 510 recevant sur sa première entrée positive la sortie du dispositif de sommation pondérée numérique correspondant 201 (aux dispositifs 201 à 204 correspondent respectivement les circuits 501 à 504). Le soustracteur 510 est suivi d'un premier multiplieur 511 et d'un registre de stockage 512 dont la sortie est celle du circuit 501. Le soustracteur 510 est également suivi, en parallèle sur les éléments 511 et 512, d'un deuxième multiplieur 513 et d'un deuxième registre de stockage 514. Ces multiplieurs peuvent être remplacés par un seul circuit de multiplication associé à un multiplexeur-démultiplexeur temporel. L'entrée négative du soustracteur 510 est reliée à la sortie du registre de stockage 514. la deuxième entrée du multiplieur 511 est reliée à la sortie d'une mémoire 470 stockant le coefficient $\alpha_j$ et celle du multiplieur 513 est reliée à la sortie d'une mémoire 480 stockant le coefficient $\gamma_{j,k}$. Les sorties $\hat{X}$, $\hat{Y}$, $\hat{Z}$, $\hat{E}$ des quatre circuits de calcul de désempilement 501 à 504 sont données, pour l'événement j, par les expressions :

$$\hat{X}_j = \alpha_j \left[ X_{m,j} - \sum_{k=j-1}^{k=j-q} \gamma_{k,j} \, \hat{X}_k \right] \qquad (19)$$

$$\hat{Y}_j = \alpha_j \left[ Y_{m,j} - \sum_{k=j-1}^{k=j-q} \gamma_{k,j} \, \hat{Y}_k \right] \qquad (20)$$

$$\hat{Z}_j = \alpha_j \, [Z_{m,j} - \sum_{k=j-1}^{k=j-q} \gamma_{k,j} \, \hat{Z}_k] \qquad (21)$$

$$\hat{E}_j = \alpha_j \, [E_{m,j} - \sum_{k=j-1}^{k=j-q} \gamma_{k,j} \, \hat{E}_k] \qquad (22)$$

Les éléments de chaque circuit 501 à 504, par exemple les éléments 510 à 514 du circuit 501, constituent un circuit de calcul de désempilement équivalent à celui qui est décrit dans la demande FR-A-2 552 233 avec les références 120 à 160. Les trois autres circuits 502 à 504 comprennent les mêmes éléments que le circuit 501.

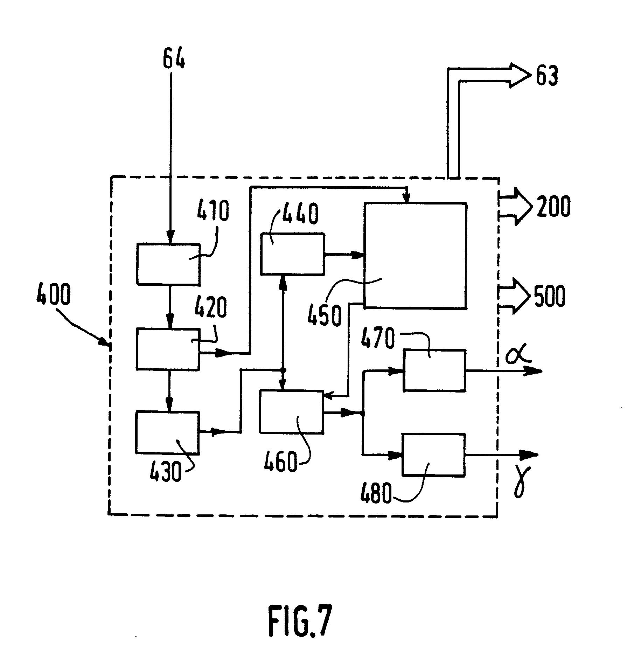

La sortie $\hat{X}$ du circuit de calcul de désempilement 501 est envoyée vers la première entrée du diviseur 505 et la sortie $\hat{Y}$ du circuit 502 vers la première entrée du diviseur 506. La deuxième entrée de chacun de ces diviseurs est constituée par la sortie $\hat{Z}$ du circuit de calcul de désempilement 503. les trois sorties de l'étage de traitement, qui sont aussi celles du calculateur, sont constituées par la sortie $x_j = \hat{X}_j/\hat{Z}_j$du diviseur 505, la sortie $x_j = \hat{Y}_j/\hat{Z}_j$du diviseur 506 et la sortie $\hat{E}_j$ du circuit de réalignement temporel 507 prévu en sortie du circuit de calcul de désempilement 504. A ces éléments est encore associé, dans le calculateur, l'étage de détection, séquencement et stockage 400. Cet étage 400, représenté sur la figure 7, comprend d'abord un détecteur de début d'impulsion 410, qui reçoit la sortie de l'amplificateur analogique de sommation 64 (voir les figures 2 et 4). Ce détecteur 410 est suivi d'un circuit d'horloge 420 qui génère des signaux périodiques assurant la commande d'un circuit de séquencement 450 et celle d'un compteur 430 de ces signaux d'horloge. Le nombre ainsi compté est soumis à un circuit de test 440 dont la sortie est envoyée vers le circuit de séquencement 450. Ce dernier assure la synchronisation des opérations effectuées dans les voies d'acquisition, dans l'étage 200 et dans l'étage 500, et valide le contenu d'un registre 460 de stockage de la sortie du compteur 430, registre qui est en parallèle sur le circuit de test 440. En sortie du registre 460 sont prévues les deux mémoires 470 et 480 mentionnées plus haut en référence à la figure 6 et stockant respectivement le coefficient $\alpha_j$ et le coefficient $\gamma_{j,k}$. Les éléments 410 à 480 qui viennent d'être cités constituent un étage de détection, séquencement et stockage similaire à celui qui est décrit dans la demande FR-A-2 552 233.

Dans un deuxième mode de réalisation, le calcul des coordonnées des événements peut être effectué sans introduire d'extrapolation, selon les expressions suivantes :

$$\hat{X}'_j = X_{m,j} - \sum_{k=j-1}^{k=j-q} C_{k,j} \, X'_k \qquad (23)$$

$$\hat{Y}'_j = Y_{m,j} - \sum_{k=j-1}^{k=j-q} C_{k,j} \, Y'_k \qquad (24)$$

$$\hat{Z}'_j = X_{m,j} - \sum_{k=j-1}^{k=j-q} C_{k,j} \, Z'_k \qquad (25)$$

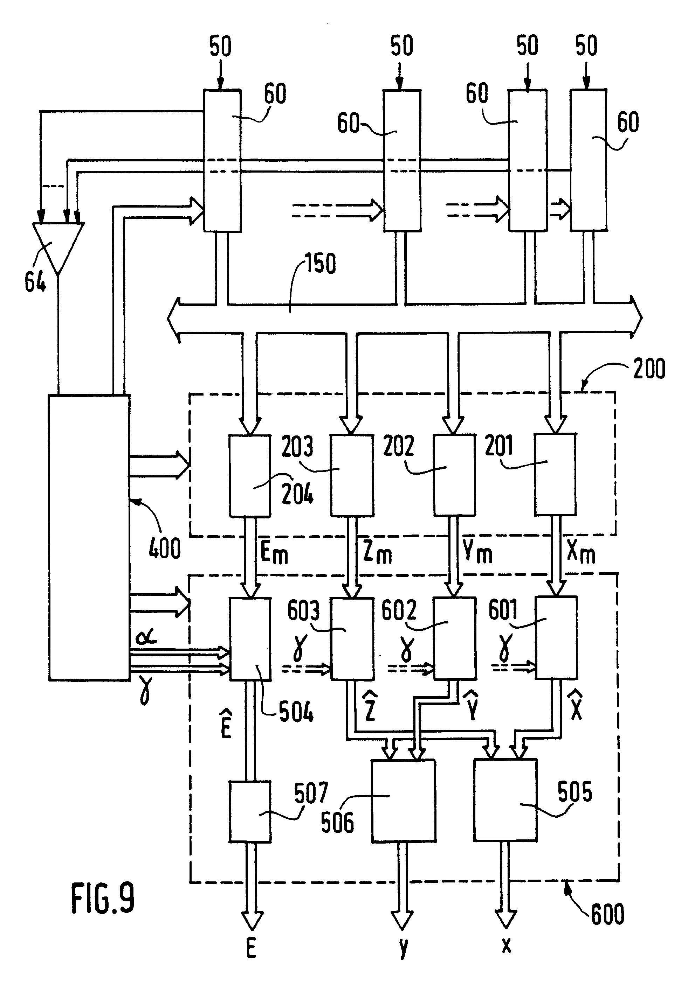

avec toujours $x_j = \hat{X}'_j/\hat{Z}'_j$et $y_j = \hat{Y}'_j/\hat{Z}'_j$. Le coefficient de correction $C_{k,j}$ est une fonction de $\theta_{j,j+1}$ et des $\theta_{k,j}$. Dans ce mode de réalisation, l'étage de traitement des événements est maintenant référencé 600, et les trois circuits de calcul de désempilement qui reçoivent respectivement les signaux $X_m$, $Y_m$, $Z_m$ sont modifiés par suppression du multiplieur 511. Ces trois circuits ont en effet la structure représentée sur la figure 8 pour l'un quelconque, par exemple le premier de ces trois circuits 601 à 603. Ce circuit 601 comprend un soustracteur 610 qui reçoit sur sa première entrée la sortie du dispositif de sommation pondérée numérique correspondant 201. Le soustracteur 610 est suivi d'une part directement d'un registre de stockage 612, dont la sortie est comme précédemment celle du circuit de calcul de désempilement, et d'autre part, en parallèle, d'un multiplieur 613 puis d'un registre de stockage 614. La sortie de ce registre 614 est renvoyée vers la deuxième entrée du soustracteur 610, et l'autre entrée du multiplieur 613 est reliée à la sortie de la mémoire 480 prévue dans l'étage 400 pour le stockage du coefficient $\gamma$. Les deux autres circuits 602 et 603 comprennent des éléments similaires. Le circuit de calcul de désempilement 504 restant inchangé, le calculateur 100 prend maintenant la configuration représentée sur la figure 9. L'énergie E est, comme précédemment, disponible en sortie du circuit de réalignement temporel 507.

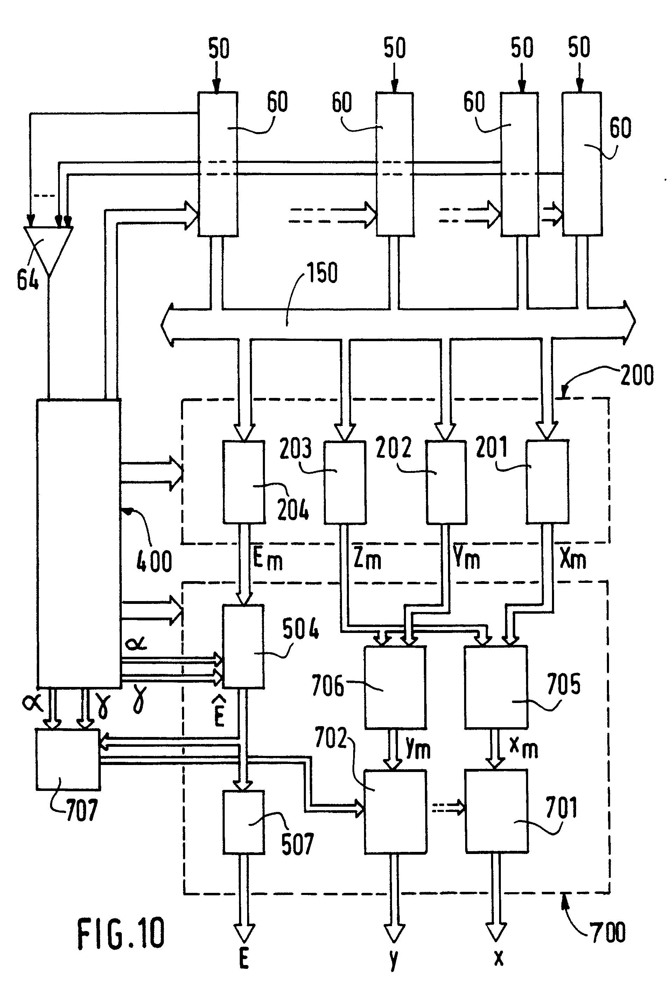

Dans un troisième mode de réalisation, représenté sur la figure 10, le calculateur 100 comprend un troisième type d'étage de traitement des événements, référencé 700. Dans cette variante de réalisation, le traitement de désempilement est effectué non plus sur les signaux $X_m$, $Y_m$, $Z_m$ de sortie de l'étage de sommation numérique 200 mais sur des coordonnées $x_m$ et $y_m$, dites mesurées car déduites directement pour chaque événement j des quantités non corrigées $X_m$, $Y_m$, $Z_m$ selon les relations $x_{m,j} = X_{m,j}/Z_{m,j}$ et $Y_{m,j} = Y_{m,j}/Z_{m,j}$. Ces signaux $x_m$ et $y_m$ sont obtenus en sortie de deux diviseurs 705 et 706, le diviseur 705 recevant les sorties de dispositifs de sommation numérique 201 et 203 et le diviseur 706 recevant celles des dispositifs 202 et 203. Les coordonnées $x_j$, $y_j$ correspondant à l'événement j sont alors obtenues en sortie de circuits de calcul de désempilement 701 et 702, à partir d'une part de ces coordonnées dites mesurées et d'autre part des coordonnées déjà connues $x_k$, $y_k$ des événements précédents qui perturbent l'événement j, conformément aux expressions suivantes :

$$x_j = x_{m,j} - \sum_{k=j-1}^{k=j-q} \Gamma_{k,j} (x_k - x_{m,j}) \qquad (26)$$

$$y_j = y_{m,j} - \sum_{k=j-1}^{k=j-q} \Gamma_{k,j} (y_k - y_{m,j}) \qquad (27)$$

Les coefficients $\Gamma_{k,j}$, qui sont fonction des intervalles de temps mesurés $\theta_{j,j+1}$, $\theta_{k,j}$ et des rapports $\hat{E}_k/\hat{E}_j$ sont calculés dans un circuit de calcul additionnel 707 qui reçoit d'une part la sortie E du circuit de calcul de désempilement 504, toujours présent dans l'étage de traitement, et d'autre part les coefficients $\alpha$ et $\gamma$ délivrés par l'étage de détection, séquencement et stockage 400. Dans cet exemple, le circuit 707 calcule d'une part, à partir des valeurs de $\hat{E}$ successivement reçues, les rapports successifs $\hat{E}_k/\hat{E}_j$ et d'autre part les produits $\alpha_j \gamma_{k,j}$ à partir desquels sont évalués les coefficients $\Gamma_{k,j}$ selon la relation $\Gamma_{k,j} = \alpha_j \gamma_{k,j} \hat{E}_k/\hat{E}_j$. Les circuits de calcul de désempilement 701 et 702 ont une configuration similaire à celle des circuits 601 et 602. L'énergie E est, là encore comme précédemment, disponible en sortie du circuit de réalignement temporel 507.

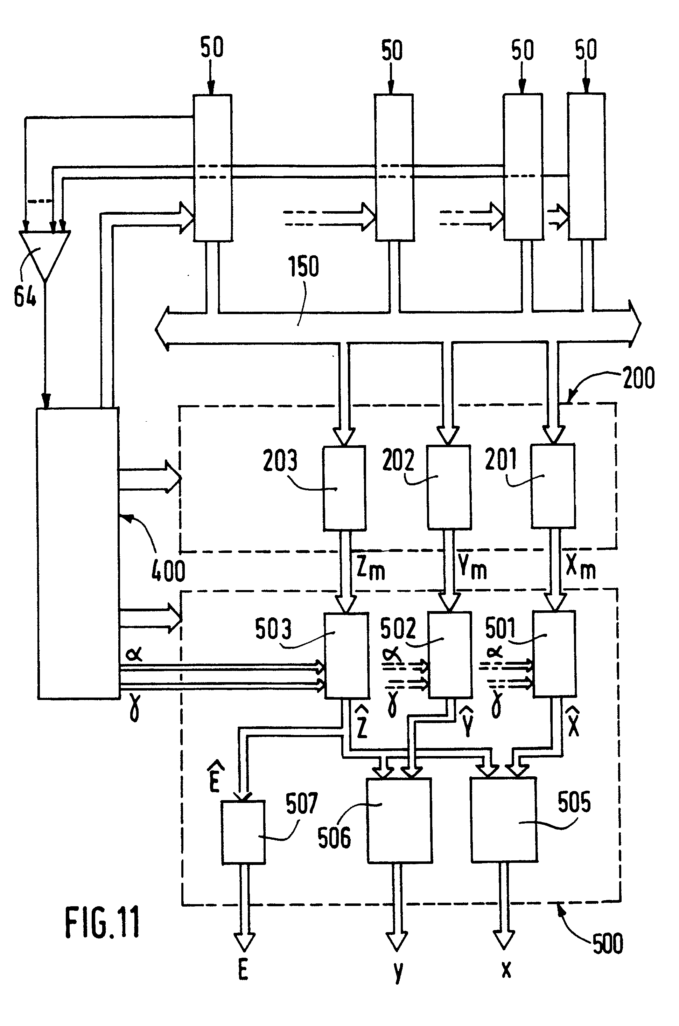

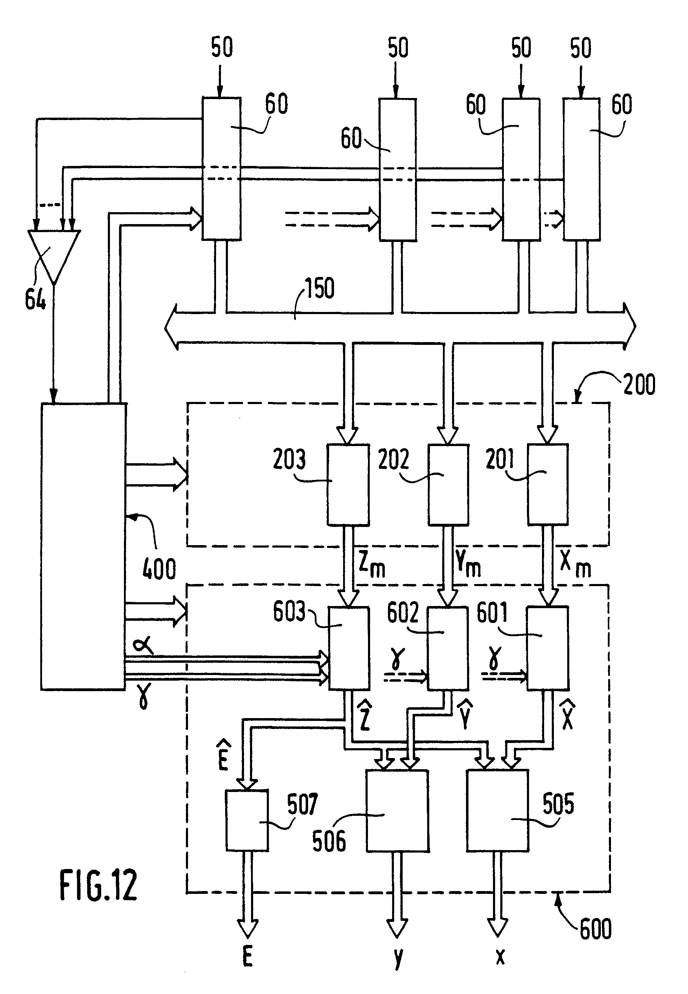

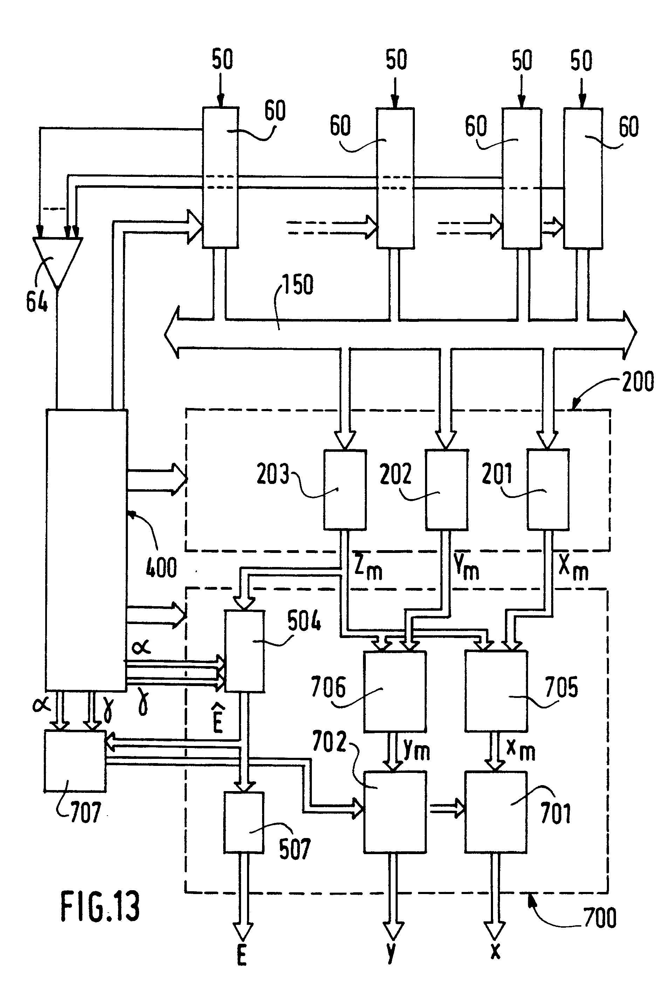

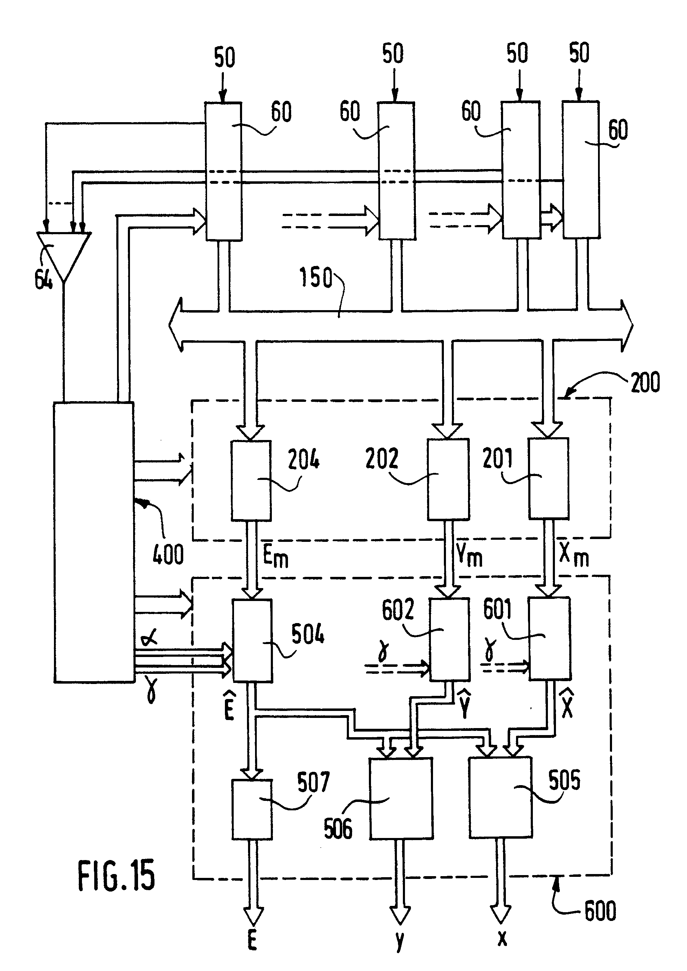

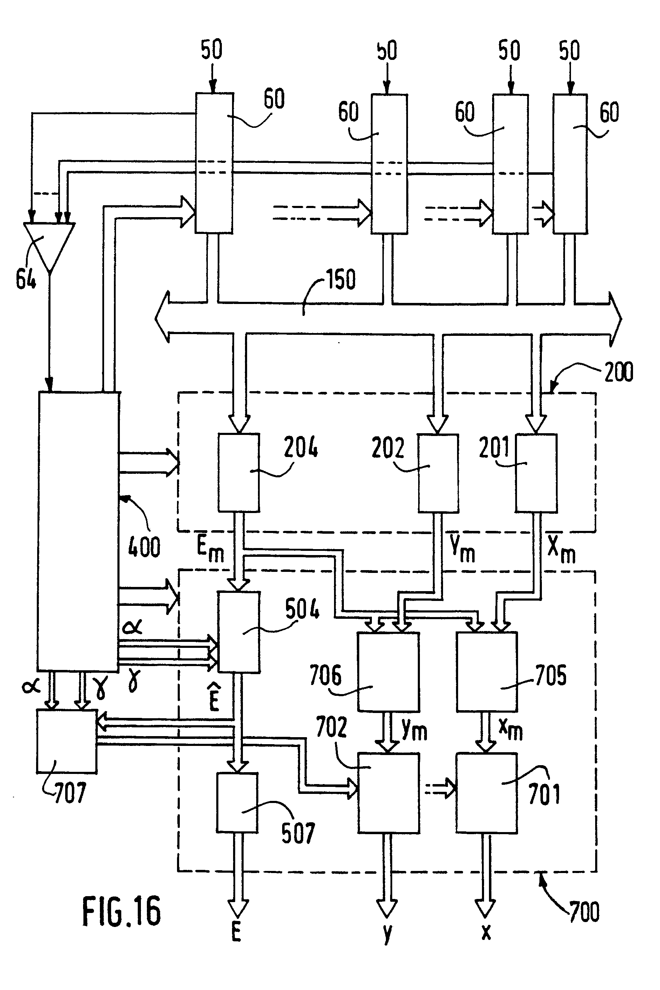

Bien entendu, la présente invention n'est pas limitée aux exemples de réalisation décrits et représentés, à partir desquels d'autres variantes peuvent encore être proposées sans pour cela sortir du cadre de l'invention. Par exemple, un circuit de réjection en amplitude du nombre des événements à traiter peut être prévu, pour n'effectuer les calculs que sur des événements sélectionnés (à l'aide d'un seuil, d'une fenêtre d'énergie, etc...). D'autre part, un multiplexeur temporel peut être prévu pour n'utiliser qu'un diviseur au lieu de deux dans chacun des modes de réalisation des figures 4, 9 et 10. Un circuit de multiplexage temporel peut également être prévu pour réduire le nombre des circuits de calcul de désempilement et n'utiliser qu'un seul circuit de calcul de désempilement au lieu des quatre circuits 501 à 504 dans le cas du mode de réalisation de la figure 4, des quatre circuits 601 à 603 et 504 dans le cas du mode de réalisation de la figure 9, ou des trois circuits 701, 702 et 504 dans le cas du mode de réalisation de la figure 10. L'ensemble des variantes proposées dans ce paragraphe s'applique également aux autres modes de réalisation des figures 11 à 16.

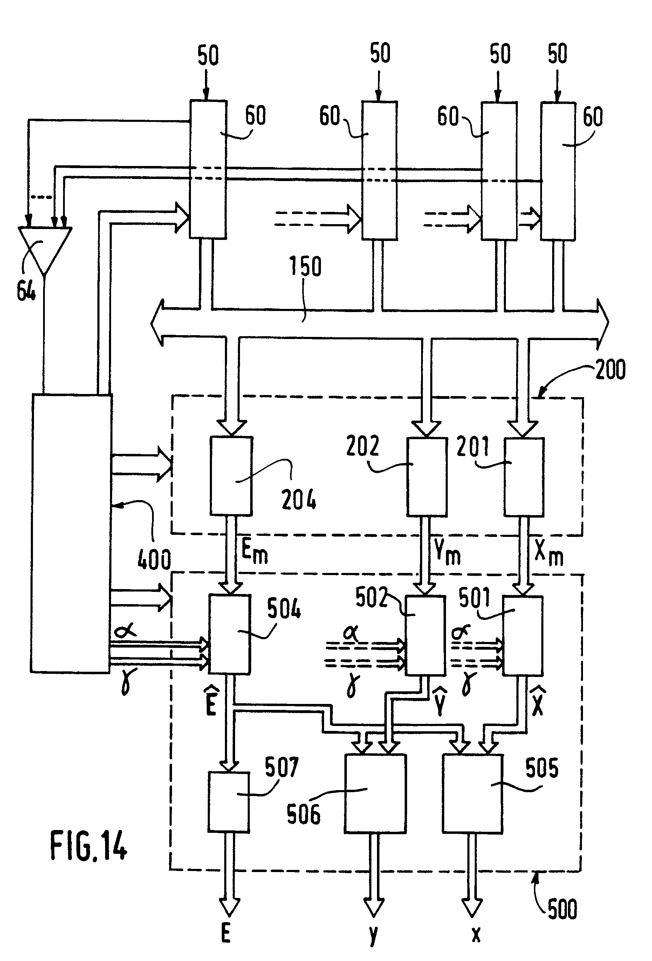

Compte tenu des moyens de correction des défauts de linéarité et d'énergie qui sont mis en oeuvre dans les caméras gamma actuellement disponibles à partir des signaux x, y, E obtenus en sortie du calculateur, on sait qu'il est possible d'utiliser indifféremment Z ou E pour le calcul des coordonnées. Dans ce cas on peut ne calculer qu'une seule de ces deux grandeurs et, selon le choix effectué, déduire l'autre grandeur de calculs faisant intervenir des corrections spécifiques de choix et exécutées par lesdits moyens. L'étage de sommation numérique 200 ne comprend plus alors que trois dispositifs de sommation pondérée numérique fournissant des signaux $X_m$, $Y_m$, $Z_m$ ou $X_m$, $Y_m$, $E_m$ respectivement. De même l'étage de traitement des événements 500 ne comprend plus que trois circuits de calcul de désempilement. Les figures 11 à 13 montrent, en correspondance aux figures 4, 9, 10, les modifications du calculateur lorsqu'on n'utilise plus que trois voies X, Y, Z, tandis que les figures 14 à 16 montrent, toujours en correspondance aux figures 4, 9, 10, les modifications du calculateur lorsqu'on n'utilise plus que trois voies X, Y, E.

D'autre part, on notera également qu'il est possible, pour travailler à des fréquences plus faibles en régularisant le débit des événements, d'introduire en amont de l'étage de sommation numérique des mémoires FIFO à écriture et lecture commandées par l'étage de détection, séquencement et stockage 400.

On notera aussi qu'il est équivalent de considérer que le bus 150 est incorporé au calculateur, dont il est l'élément d'entrée ou d'accès, ou qu'au contraire il lui est associé sans lui être inclus.

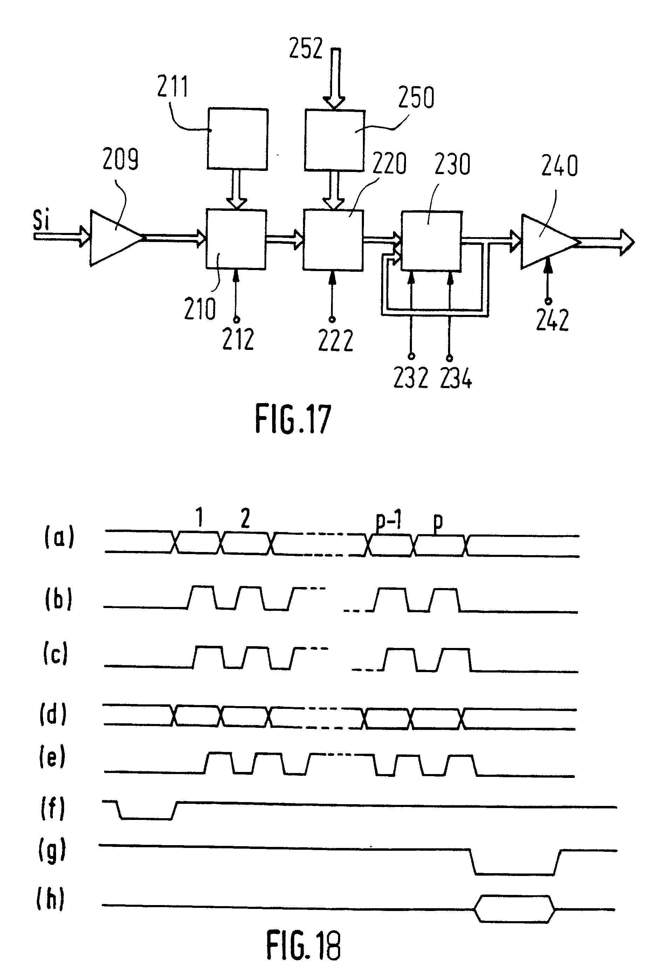

Enfin, en lieu et place de chacun des dispositifs de sommation pondérée numérique classiques indiqués précédemment, peut être prévu un mode de réalisation particulier de tels dispositfs. Cette variante de dispositif de sommation, représentée sur la figure 17, comprend un multiplieur numérique 220, qui reçoit séquentiellement par l'intermédiaire d'un premier circuit de mise en forme 209 les signaux dont on-veut effectuer la somme pondérée, un additionneur-accumulateur 230, et un deuxième circuit de mise en forme 240. Le premier des circuits de mise en forme est essentiellement destiné à la remise en forme des signaux qui, à leur arrivée, sont éventuellement pollués par les circuits précédemment traversés, tandis que le deuxième réalise notamment, outre une remise en forme, un gain en courant et/ou une adaptation d'impédance.

Une mémoire numérique 250 fournit au multiplieur numérique 220 les coefficients de pondération à affecter aux-dits signaux. Les multiplieurs-numériques actuellement disponibles en circuit intégré sur le marché (et dont certains incorporent d'ailleurs l'additionneur-accumulateur) permettent de travailler aussi bien sur des données signées que non signées. On peut ainsi stocker dans la mémoire numérique 250 des coefficients de pondération soit positifs, soit négatifs.

Entre le premier circuit de mise en forme 209 et le multiplieur numérique 220, il est prévu, en série, un circuit de traitement 210. Ce circuit 210 est commandé par un signal d'horloge qui est décrit plus loin. A ce circuit de traitement 210 est ici associé un registre numérique 211 contenant une valeur de seuil, éventuellement modifiable (y compris jusqu'à la valeur 0). Le circuit de traitement 210 peut être simplement un circuit d'élimination des signaux inférieurs à ce seuil ou être un circuit de structure plus complexe.

Dans un premier mode de réalisation, la mémoire numérique 250 est une mémoire de type ROM (en anglais : "Read-Only Memory") à lecture seule. Les coefficients que contient cette mémoire sont alors fixés une fois pour toutes lors de sa fabrication. Dans un mode de réalisation plus perfectionné, la mémoire 250 peut être par exemple de type RAM (en anglais : "Random Access Memory") à écriture et lecture aléatoires. Les coefficients de pondération peuvent alors être modifiés par l'intermédiaire d'un circuit additionnel câblé, ou microprogrammé (microprocesseur, microordinateur,...).

Le fonctionnement de chaque dispositif de sommation pondérée numérique est maintenant décrit en référence à la figure 18, qui montre la forme des signaux présents en différents points du dispositif.

Les signaux numériques qui se présentent à l'entrée du circuit de mise en forme 209 sont référencés $S_1$, $S_2$,..., $S_i$,..., $S_p$, ... etc... et sont représentés sur la figure 18a. Après mise en forme, ces signaux sont reçus par le circuit de traitement 210 au rythme du signal d'horloge représenté sur la figure 18b et avec lequel l'arrivée des signaux numériques $S_1$, $S_2$,..., $S_p$,..., est synchrone. Ce signal d'horloge est reçu sur la connexion 212. Dans l'exemple décrit, le circuit 211 définit la valeur d'un seuil et les signaux de sortie du circuit 209 sont transmis, ou non, au multiplieur numérique 220 selon qu'ils sont supérieurs ou égaux, ou au contraire inférieurs respectivement, à ladite valeur de seuil.

Les signaux présents en sortie du circuit de traitement 210 sont alors multipliés par des coefficients de pondération respectifs au rythme d'un signal fourni sur la connexion 222. Ce signal, représenté sur la figure 18c, est identique à celui de la figure 18b, mais retardé par rapport à lui du temps nécessaire au transfert des signaux. Les coefficients de pondération sont fournis par la mémoire 250, dont l'adressage est effectué au rythme du signal représenté sur la figure 18d, présent sur la connexion 252 et en phase avec celui de la figure 18a.

L'additionneur-accumulateur 230 effectue alors la sommation progressive des signaux numériques pondérés se présentant sur son entrée, et ce au rythme du signal représenté sur la figure 18e, identique à celui de la figure 18b mais également retardé -de façon distincte du cas précédent- par rapport à lui pour la compensation des temps de propagation des signaux. Ce signal de la figure 18e est reçu sur la connexion 232, une connexion 234 étant prévue pour délivrer un signal de remise à zéro de l'additionneur-accumulateur représenté sur la figure 18f. Enfin, un signal de validation représenté sur la figure 18g et fourni au circuit de mise en forme 240, sur la connexion 242 de celui-ci, permet de disposer en sortie de ce circuit 240 du signal de sommation pondérée recherché. Ce signal de sommation est représenté sur la figure 18h (l'état précédant son arrivée est un état dit de haute impédance).

La mise en place de ce mode de réalisation des dispositifs de sommation est particulièrement avantageuse. Il en résulte en effet une amélioration des caractéristiques de la caméra à scintillation, et notamment de sa résolution spatiale intrinsèque. Dans l'exemple décrit, les p signaux de sortie des p voies d'acquisition sont donc transmis séquentiellement aux dispositifs de calcul de somme pondérée. L'adressage des p voies d'acquisition est identique à celui de la mémoire numérique 250 de chaque dispositif de sommation, ces mémoires 250 étant, on l'a vu, de type ROM ou RAM selon le degré de flexibilité souhaité pour la caméra à scintillation.

Dans le cadre des essais qui ont été réalisés, la mise en place de tels dispositifs de sommation pondérée dans une caméra à scintillation a conduit à des durées de cycle de calcul voisines de 50 nanosecondes. Un cycle d'une telle brièveté permet d'accepter des taux de comptage effectifs de la caméra à scintillation supérieurs à 300.000 coups par seconde, pour une caméra comprenant par exemple 61 tubes photomultiplicateurs et 61 voies d'acquisition. On précisera ici que le seuil imposé par le registre numérique 211 peut être par exemple modifiable simplement entre des cycles de calcul complets, ou bien au contraire de façon dynamique en liaison avec la valeur de chacun des signaux. Il en est de même pour les coefficients de pondération, modifiables soit avant un cycle de fonctionnement, par exemple pour le calibrage de la caméra à scintillation ou encore parce qu'on utilise des sources radioactives d'énergies différentes, soit de façon dynamique en fonction de la valeur de chacun des signaux.

**Revendications**

1. Caméra à scintillation comprenant un cristal scintillateur éventuellement équipé d'un collimateur et destiné à convertir chaque photon reçu en une scintillation, un guide de lumière pour le couplage dudit cristal à la fenêtre d'entrée d'un jeu de p photodétecteurs destinés à convertir en courant chaque scintillation, p voies d'acquisition recevant les signaux de sortie desdits photodétecteurs et délivrant p signaux électriques de caractéristiques liées notamment à l'intensité de la scintillation et à la distance de cette scintillation à chacun des photodétecteurs, et un calculateur destiné à délivrer les coordonnées $x_j$ et $y_j$ d'une scintillation j et l'énergie $E_j$ qui est associée à cet événement j, caractérisée :

   (A) en ce que lesdites p voies d'acquisition réalisent l'amplification, le filtrage et l'échantillonnage desdits signaux de sortie des photodétecteurs, puis la conversion analogique-numérique des échantillons obtenus et leur sommation, et délivrent p signaux numériques à l'entrée du calculateur ;

   (B) en ce que le calculateur comprend lui-même :

   (a) un bus de transfert desdits p signaux numériques ;

   (b) un étage de sommation numérique comprenant quatre dispositifs de sommation pondérée numérique qui délivrent à partir des signaux de sortie des p voies d'acquisition quatre signaux numériques $X_m$, $Y_m$, $Z_m$, $E_m$ ;

   (c) un étage de traitement des événements incluant des circuits de calcul de désempilement et deux diviseurs et délivrant à partir des signaux $X_m$, $Y_m$, $Z_m$, $E_m$ les trois signaux de coordonnées et d'énergie x, y, E;

   (C) en ce qu'un étage de détection séquencement et stockage recevant un signal qui correspond à la somme des p signaux de sortie des photodétecteurs est prévu pour délivrer d'une part les différents signaux d'horloge pour la synchronisation des éléments de p voies d'acquisition et des éléments du calculateur et d'autre part des coefficients de correction destinés à l'étage de traitement des événements

2. Caméra à scintillation selon la revendication 1, caractérisée en ce que l'étage de traitement des événements comprend quatre circuits de calcul de désempilement, recevant respectivement les signaux numériques $X_m$, $Y_m$, $Z_m$, $E_m$, et délivrant quatre signaux $\hat{X}$, $\hat{Y}$, $\hat{Z}$, $\hat{E}$, et deux diviseurs délivrant respectivement deux signaux $x = \hat{X}/\hat{Z}$ et $y = \hat{Y}/\hat{Z}$, les trois signaux x, y, E étant constitués par les signaux de sortie respectivement du premier diviseur, du deuxième diviseur et d'un circuit de réalignement temporel recevant la sortie du quatrième circuit de calcul de désempilement, et en ce que les coefficients de correction sont des coefficients de correction par extrapolation et interpolation, $\alpha$ et $\gamma$ respectivement, destinés aux quatre circuits de calcul de désempilement de l'étage de traitement des événements.

3. Caméra à scintillation selon la revendication 2, caractérisée en ce que chacun des quatre circuits de calcul de désempilement comprend un soustracteur recevant sur sa première entrée la sortie du dispositif de conversion et d'intégration correspondant, ce soustracteur étant suivi d'une part d'un premier multiplieur et d'un premier registre de stockage, et d'autre part, en parallèle sur ce premier multiplieur et ce premier registre, d'un deuxième multiplieur et d'un deuxième registre de stockage, la sortie de ce deuxième registre étant reliée à la deuxième entrée du soustracteur et les deuxièmes entrées des premier et deuxième multiplieurs étant reliées la première à la sortie de la mémoire de stockage du coefficient $\alpha$ et la seconde à la sortie de la mémoire de stockage du coefficient $\gamma$.

4. Caméra à scintillation selon la revendication 3, caractérisée en ce que les multiplieurs sont remplacés par un seul circuit de multiplication associé à un multiplexeur-démultiplexeur temporel.

5. Caméra à scintillation selon la revendication 1, caractérisée en ce que chacun des trois premiers circuits de calcul de désempilement comprend un soustracteur recevant sur sa première entrée la sortie du dispositif de sommation numérique correspondant, suivi d'une part d'un troisième registre de stockage dont la sortie est celle du circuit de calcul de désempilement et d'autre part, en parallèle, d'un troisième multiplieur puis d'un quatrième registre de stockage, la sortie de ce quatrième registre étant reliée à la deuxième entrée du soustracteur et l'autre entrée du troisième multiplieur étant reliée à la sortie de la mémoire de stockage du coefficient $\gamma$.

6. Caméra à scintillation selon la revendication 1, caractérisée en ce que l'étage de traitement des événements comprend trois circuits de calcul de désempilement, deux diviseurs, un circuit de réalignement temporel, et un circuit de calcul additionnel, les deux diviseurs recevant les signaux $X_m$, $Y_m$, $Z_m$ pour délivrer deux signaux $x_m = X_m/Z_m$ et $y_m = Y_m/Z_m$, les deux premiers circuits de calcul de désempilement recevant lesdits signaux $x_m$, $y_m$ et délivrant les signaux x,y et le troisème recevant le signal $E_m$ et délivrant le signal E, et le circuit de calcul additionnel recevant d'une part ledit signal E et d'autre part lesdits coefficients de correction pour fournir aux premier et deuxième circuits de calcul de désempilement un coefficient de correction additionnel $\Gamma$.

7. Caméra à scintillation comprenant au cristal scintillateur éventuellement équipé d'un collimateur et destiné à convertir chaque photon reçu en une scintillation, un guide de lumière pour le couplage dudit cristal à la fenêtre d'entrée d'un jeu de p photodétecteurs destinés à convertir en courant chaque scintillation, p voies d'acquisition analogiques recevant les signaux de sortie desdits photodétecteurs et délivrant p signaux électriques de caractéristiques liées notamment à l'intensité de la scintillation et à la distance de de cette scintillation à chacun des photodétecteurs, et un calculateur destiné à délivrer les coordonnées $x_j$ et $y_j$ d'une scintillation j et l'énergie $E_j$ qui est associée à cet événement j, caractérisée :

    (A) en ce que lesdits p voies d'acquisition réalisent l'amplification, le filtrage et l'échantillonnage desdits signaux de sortie des photodétecteurs, puis la conversion analogique-numérique des échantillons obtenus et leur sommation, et délivrent p signaux numériques à l'entrée du calculateur ;
    (B) en ce que le calculateur comprend lui-même :
        (a) un bus de transfert desdits p signaux numériques ;
        (b) un étage de sommation numérique comprenant trois dispositifs de sommation pondérée numérique qui délivrent à partir des signaux de sortie des p voies d'acquisition trois signaux numériques $X_m$, $Y_m$, $Z_m$ ou $X_m$, $Y_m$, $E_m$ respectivement ;
        (c) un étage de traitement des événements incluant des circuits de calcul de désempilement et deux diviseurs et délivrant à partir desdits signaux numériques $X_m$, $Y_m$, $Z_m$ ou $X_m$, $Y_m$, $E_m$ respectivement les trois signaux de coordonnées et d'énergie x, y, E;
    (C) en ce qu'un étage de détection, séquencement et stockage recevant un signal qui correspond à la somme des p signaux de sortie des photodétecteurs est prévu pour délivrer d'une part les différents signaux d'horloge pour la synchronisation des éléments des p voies d'acquisition et des éléments du calculateur et d'autre part des coefficients de correction destinés à l'étage de traitement des événements.

8. Caméra à scintillation selon la revendication 7, caractérisée en ce que l'étage de traitement des événements comprend trois circuits de calcul de désempilement, recevant respectivement lesdits signaux numériques, $X_m$, $Y_m$, $Z_m$, ou $X_m$, $Y_m$, $E_m$ respectivement, et délivrant trois signaux $\widehat{X}$, $\widehat{Y}$, $\widehat{Z}$, ou $\widehat{X}$, $\widehat{Y}$, $\widehat{E}$ respectivement, et deux diviseurs délivrant respectivement deux signaux $x = \widehat{X}/\widehat{Z}$ et $y = \widehat{Y}/\widehat{Z}$ ou $x = \widehat{X}/\widehat{E}$ et $y = \widehat{Y}/\widehat{E}$ respectivement , les trois signaux x, y, E étant constitués par les signaux de sortie respectivement du premier diviseur, du deuxième diviseur et d'un circuit de réalignement temporel recevant la sortie du troisième circuit de calcul de désempilement, et en ce que les coefficients de correction sont des coefficients de correction par extrapolation et interpolation, $\alpha$ et $\gamma$ respectivement, destinés aux trois circuits de calcul de désempilement de l'étage de traitement des événements.

9. Caméra à scintillation selon la revendication 8, caractérisée en ce que chacun des trois circuits de calcul de désempilement comprend un soustracteur recevant sur sa première entrée la sortie du dispositif de conversion et d'intégration correspondant, ce soustracteur étant suivi d'une part d'un premier multiplieur et d'un premier registre de stockage et d'autre part, en parallèle sur ce premier multiplieur et ce premier registre, d'un deuxième multiplieur et d'un deuxième registre de stockage, la sortie de ce deuxième registre étant reliée à la deuxième entrée du soustracteur et les deuxièmes entrées des premier et deuxième multiplieurs étant reliées la première à la sortie de la mémoire de stockage du coefficient $\alpha$ et la seconde à la sortie de la mémoire de stockage du coefficient $\gamma$.

10. Caméra à scintillation selon la revendication 9, caractérisée en ce que les multiplieurs sont remplacés par un seul circuit de multiplication associé à un multiplexeur-démultiplexeur temporel.

11. Caméra à scintillation selon la revendication 7, caractérisée en ce que chacun des trois circuits de calcul de désempilement comprend un soustracteur recevant sur sa première entrée la sortie du dispositif de sommation numérique correspondant, suivi d'une part d'un troisième registre de stockage dont la sortie est celle du circuit de calcul de désempilement et d'autre part, en parallèle, d'un troisième multiplieur puis d'un quatrième registre de stockage, la sortie de ce quatrième registre étant reliée à la deuxième entrée du soustracteur et l'autre entrée du troisième multiplieur étant reliée à la sortie de la mémoire de stockage du coefficient $\gamma$.

12. Caméra à scintillation selon la revendication 1, caractérisée en ce que l'étage de traitement des événements comprend trois circuits de calcul de désempilement, deux diviseurs, un circuit de réalignement temporel, et un circuit de calcul additionnel, les deux diviseurs recevant les signaux $X_m$, $Y_m$, $Z_m$ pour délivrer deux signaux $x_m = X_m/Z_m$ et $y_m = Y_m/Z_m$, ou respectivement les signaux $X_m$, $Y_m$, $E_m$ pour délivrer deux signaux $x_m = X_m/E_m$ et $y_m = Y_m/E_m$, les deux premiers circuits de calcul de désempilement recevant lesdits signaux $x_m$, $y_m$ et délivrant les signaux x,y et le troisième recevant le signal $Z_m$ ou $E_m$ et délivrant le signal $\hat{E}$, et le circuit de calcul additionnel recevant d'une part ledit signal E et d'autre part lesdits coefficients de correction pour fournir aux premier et deuxième circuits de calcul et désempilement un coefficient de correction additionnel $\Gamma$.

13. Caméra à scintillation selon l'une des revendications 1 à 12, caractérisée en ce que les diviseurs sont remplacés par un seul circuit de division associé à un multiplexeur-démultiplexeur temporel.

14. Caméra à scintillation selon l'une des revendications 1 à 13, caractérisée en ce que les circuits de calcul de désempilement sont remplacés par un seul de ces circuits auquel est associé un multiplexeur-démultiplexeur temporel.

15. Caméra à scintillation selon l'une des revendications 1 à 14, caractérisée en ce qu'est prévu un circuit de réjection en amplitude pour la réduction du nombre d'événements à traiter.

16. Caméra à scintillation selon l'une des revendications 1 à 15, caractérisée en ce que des mémoires dites FIFO sont prévues en sortie de chacun des p voies d'acquisition ou en amont de chacun des dispositifs de sommation pondérée numérique.

17. Caméra à scintillation selon l'une des revendications 1 à 16, caractérisée en ce que le bus est associé au calculateur sans lui être inclus.

18. Caméra à scintillation selon l'une des revendications 1 à 17, caractérisée en ce que chaque dispositif de sommation pondérée numérique comprend en série un premier circuit de mise en forme recevant séquentiellement les signaux numériques dont on veut effectuer une somme pondérée, un circuit de traitement, un multiplieur numérique recevant sur sa première entrée la sortie dudit circuit de traitement, un additionneur-accumulateur des signaux de sortie successifs dudit multiplieur numérique, et un deuxième circuit de mise en forme destiné à délivrer les signaux de sortie du dispositif de sommation pondérée numérique, le circuit de traitement étant commandé par le signal d'horloge qui fixe la cadence de présentation des signaux numériques à l'entrée du dispositif, un registre numérique étant associé audit circuit de traitement pour lui fournir une valeur de seuil éventuellement modifiable, et ledit multiplieur numérique recevant sur une deuxième entrée la sortie d'une mémoire numérique destinée à délivrer les coefficients de pondération à affecter auxdits signaux numériques.

19. Caméra à scintillation selon la revendication 18, caractérisée en ce que ladite mémoire numérique est une mémoire dite ROM.

20. Caméra à scintillation selon la revendication 18, caractérisée en ce que ladite mémoire numérique est une mémoire dite RAM à laquelle est associé un circuit additionnel de modification de coefficients.

21. Caméra à scintillation selon la revendication 20, caractérisée en ce que ledit circuit additionnel de modification de coefficients est une circuit câblé.

22. Caméra à scintillation selon la revendication 20, caractérisée en ce que ledit circuit additionnel de modification de coefficients est un circuit microprogrammé tel qu'un microprocesseur ou un microordinateur.

**Claims**

1. A scintillation camera, comprising a scintillation crystal which may be provided with a collimator and which serves to convert each photon received into a scintillation, a light guide for coupling said crystal to the entrance window of an array of p photodetectors which serve to convert each scintillation into a current, p acquisition channels which receive the output signals of said photodetectors and which supply p characteristic electric signals which relate notably to the intensity of the scintillation and to the distance between said scintillation and each of the photodetectors, and a processor which serves to supply the coordinates $X_j$ and $y_j$ of a scintillation j and its associated energy $E_j$, characterized in that:

   (A) said p acquisition channels amplify, filter and sample said output signals of the photodetectors, followed by the A/D conversion of the samples obtained and their summing, and apply p digital signals to the input of the processor;

   (B) the processor itself comprises:

   (a) a bus for transferring said p digital signals;

   (b) a digital summing stage, comprising four digital weighted sum forming devices which supply four digital signals $X_m$, $Y_m$, $Z_m$, $E_m$ on the basis of the output signals of the p acquisition channels;

   (c) an event processing stage which includes unpiling calculation circuits and two dividers and which supplies the three coordinate and energy signals x, y, E on the basis of the signals $X_m$, $Y_m$, $Z_m$, $E_m$;

   (C) a detection, sequencing and storage stage which receives a signal which corresponds to the sum of the p output signals of the photodetectors is provided in order to supply on the one hand the various clock signals for synchronizing the elements of the p acquisition channels and the elements of the processor, and on the other hand the correction coefficients for the event processing stage.

2. A scintillation camera as claimed in Claim 1, characterized in that the event processing stage comprises four unpiling calculation circuits which receive the digital signals $X_m$, $Y_m$, $Z_m$, $E_m$, respectively, and which supply four signals $\widehat{X}$, $\widehat{Y}$, $\widehat{Z}$, $\widehat{E}$, and two dividers which supply two signals $x = \widehat{X}/\widehat{Z}$ and $y = \widehat{Y}/\widehat{Z}$, respectively, the three signals x, y, E being formed by the output signals of the first divider, the second divider, and a time realignment circuit, respectively, which receives the output signal of the fourth unpiling calculation circuit, the correction coefficients being coefficients for correction by extrapolation and interpolation, $\alpha$ and $\gamma$, respectively, intended for the four unpiling calculation circuits of the event processing stage.

3. A scintillation camera as claimed in Claim 2, characterized in that each of the four unpiling calculation circuits comprises a subtractor whose first input receives the output signal of the corresponding conversion and integration device, which subtractor is followed on the one hand by a first multiplier and a first storage register and on the other hand by a second multiplier and a second storage register which are connected parallel to the first multiplier and the first storage register, the output of said second register being connected to the second input of the subtractor, the second input of the first multiplier being connected to the output of the memory for storing the coefficient $\alpha$, whilst the second input of the second multiplier is connected to the output of the memory for storing the coefficient $\gamma$.

4. A scintillation camera as claimed in Claim 3, characterized in that the multipliers are replaced by a single multiplier circuit which is associated with a time multiplexer/demultiplexer.

5. A scintillation camera as claimed in Claim 1, characterized in that each of the first three unpiling calculation circuits comprises a subtractor whose first input receives the output signal of the corresponding digital summing device, followed on the one hand by a third storage register whose output is that of the unpiling calculation circuit, and on the other hand, in parallel, by a third multiplier, followed by a fourth storage register, the output of said fourth register being connected to the second input of the subtractor, the other input of the third multiplier being connected to the output of the memory for storing the coefficient $\gamma$.

6. A scintillation camera as claimed in Claim 1, characterized in that the event processing stage comprises three unpiling calculation circuits, two dividers, a time realignment circuit, and an additional calculation circuit, the two dividers receiving the signals $X_m$, $Y_m$, $Z_m$ in order to supply two signals $x_m = X_m/Z_m$ and $y_m = Y_m/Z_m$, the first two unpiling calculation circuits receiving said signals $X_m$, $y_m$ and supplying the signals x, y, the third unpiling calculation circuit receiving the signal $E_m$ and supplying the signal $\hat{E}$, the additional calculation circuit receiving on the one hand said signal $\hat{E}$ and on the other hand said correction coefficients in order to supply the first and the second unpiling calculation circuit with an additional correction coefficient $\Gamma$.

7. A scintillation camera, comprising a scintillation crystal which may be provided with a collimator and which serves to convert each photon received into a scintillation, a light guide for coupling said crystal to the entrance window of an array of p photodetectors which serve to convert each scintillation into a current, p analog acquisition channels which receive the output signals of said photodetectors and which supply p characteristic electric signals which relate notably to the intensity of the scintillation and to the distance between the respective scintillation and each of the photodetectors, and a processor which serves to supply the coordinates $x_j$ and $y_j$ of a scintillation j and the energy $E_j$ associated with said event j, characterized in that:

(A) said p acquisition channels realize the amplification, filtering and sampling of said output signals of the photodetectors, followed by A/D conversion of the samples obtained and their summing, and apply p digital signals to the input of the processor;

(B) the processor itself comprises:

(a) a bus for transferring said p digital signals;

(b) a digital summing device which comprises three digital weighted sum forming devices which supply three digital signals $X_m$, $Y_m$, $Z_m$ or $X_m$, $Y_m$, $E_m$, respectively, on the basis of the output signals of the p acquisition channels;

(c) an event processing stage which includes the unpiling calculation circuits and two dividers and which supplies, on the basis of said digital signals $X_m$, $Y_m$, $Z_m$ or $X_m$, $Y_m$, $E_m$, respectively, the three coordinate and energy signals x, y, E;

(C) a detection, sequencing and storage stage which receives a signal which corresponds to the sum of the p output signals of the photodetectors is provided in order to supply on the one hand the various clock signals for synchronizing the elements of the p acquisition channels with the elements of the processor, and on the other hand correction coefficients for the event processing stage.

8. A scintillation camera as claimed in Claim 7, characterized in that the event processing stage comprises three unpiling calculation circuits which receive said digital signals $X_m$, $Y_m$, $Z_m$ or $X_m$, $Y_m$, $E_m$, respectively, and which supply three signals $\hat{X}$, $\hat{y}$, $\hat{Z}$ or $\hat{X}$, $\hat{Y}$, $\hat{E}$, respectively, and two dividers which supply two signals $x = \hat{X}/\hat{Z}$ and $y = \hat{Y}/\hat{Z}$ or $x = \hat{X}/\hat{E}$ and $y = \hat{Y}/\hat{E}$, respectively, the three signals x, y, E being formed by the output signals of the first divider, the second divider and a time realignment circuit, respectively, which receives the output signal of the third unpiling calculation circuit, the correction coefficients being coefficients for correction by extrapolation and interpolation, $\alpha$ and $\gamma$, respectively, which are intended for the three unpiling calculation circuits of the event processing stage.

9. A scintillation camera as claimed in Claim 8, characterized in that each of the three unpiling calculation circuits comprises a subtractor whose first input receives the output signal of the corresponding conversion and integration device, which subtractor is followed on the one hand by a first multiplier and a first storage register and on the other hand by a second multiplier and a second storage register which are connected parallel to the first multiplier and the first storage register, the output of the second register being connected to the second input of the subtractor and the second input of the first multiplier being connected to the output of the memory for storing the coefficient $\alpha$ whilst the second input of the second multiplier is connected to the output of the memory for storing the coefficient $\gamma$.

10. A scintillation camera as claimed in Claim 9, characterized in that the multipliers are replaced by a single multiplier circuit which is associated with a time multiplexer/demultiplexer.

11. A scintillation camera as claimed in Claim 7, characterized in that each of the three unpiling calculation circuits comprises a subtractor whose first input receives the output signal of the corresponding digital summing device, followed on the one hand by a third storage register whose output is that of the unpiling calculation circuit and on the other hand, in parallel, by a third multiplier followed by a fourth storage register, the output of the fourth storage register being connected to the second input of the subtractor, the other input of the third multiplier being connected to the output of the memory for storing the coefficient $\gamma$.

12. A scintillation camera as claimed in Claim 1, characterized in that the event processing stage comprises three unpiling calculation circuits, two dividers, one time realignment circuit, and one additional calculation circuit, the two dividers receiving the signals $X_m$, $Y_m$, $Z_m$ in order to supply two signals $xm = X_m/Z_m$ and $y_m = Y_m/Z_m$, or the signals $X_m$, $Y_m$, $E_m$, respectively, in order to supply to signals $x_m = X_m/E_m$ and $y_m = Y_m/E_m$, respectively, the first two unpiling calculation circuits receiving said signals $x_m$, $y_m$ and supplying the signals x, y, whilst the third unpiling calculation circuit receives the signal $Z_m$ or $E_m$ and supplies the signal $\hat{E}$, the additional calculation circuit receiving on the one hand said signal $\hat{E}$ and on the other hand said correction coefficients in order to supply the first and the second unpiling calculation circuit with an additional correction coefficient $\Gamma$.

13. A scintillation camera as claimed in any one of the Claims 1 to 12, characterized in that the dividers are replaced by a single divider circuit associated with a time multiplexer/demultiplexer.

14. A scintillation camera as claimed in any one of the Claims 1 to 13, characterized in that the unpiling calculation circuits are replaced by a single one of these circuits in association with a time multiplexer/demultiplexer.

15. A scintillation camera as claimed in any one of the Claims 1 to 14, characterized in that there is provided an amplitude rejection circuit for reducing the number of events to be processed.

16. A scintillation camera as claimed in any one of the Claims 1 to 15, characterized in that FIFO memories are connected to the output of each of the p acquisition channels or upstream from each of the digital weighted sum forming devices.

17. A scintillation camera as claimed in any one of the Claims 1 to 16, characterized in that the bus is connected to the processor without being included therein.

18. A scintillation camera as claimed in any one of the Claims 1 to 17, characterized in that each digital weighted sum forming device comprises a series connection of a first shaping circuit which sequentially receives the digital signals for which a weighted sum is to be formed, a processing circuit, a digital multiplier whose first input receives the output signal of said processing circuit, an adder/accumulator for the successive output signals of said digital multiplier, and a second shaping circuit which serves to supply the output signals of the digital weighted sum forming device, the processing circuit being controlled by the clock signal which determines the rhythm of the presentation of the digital signals to the input of the device, a digital register being associated with said processing circuit in order to supply a (possibly variable) threshold value thereto, a second input of said digital multiplier receiving the output signal of a digital memory which serves to supply the weighting coefficients to be applied to said digital signals.

19. A scintillation camera as claimed in Claim 18, characterized in that said digital memory is a ROM.

20. A scintillation camera as claimed in Claim 18, characterized in that said digital memory is a RAM with which there is associated an additional circuit for modifying coefficients.

21. A scintillation camera as claimed in Claim 20, characterized in that the additional circuit for modifying coefficients is a wired circuit.

22. A scintillation camera as claimed in Claim 20, characterized in that the additional circuit for modifying coefficients is a microprogrammed circuit such as a microprocessor or a microcomputer.

## Ansprüche

1. Szintillationskamera mit einem Szintillationskristall, der ggf. mit einem Kollimator ausgerüstet ist und

EP 0 252 566 B1

zum Umsetzen jedes empfangenen Photons in eine Szintillation dient, mit einem Lichtleiter zum Koppeln des Kristalls beim Eintrittsfenster mit einer Gruppe von p Photodetektoren zum Umsetzen jeder Szintillation in Strom, mit p Erfassungskanälen zum Empfangen der Ausgangssignale der Photodetektoren und zum Ausgeben von p elektrischen Signalen, deren Charakteristiken insbesondere mit der Szintillationsintensität und mit dem Abstand dieser Szintillation zu jedem der Photodetektoren verknüpft sind, und mit einem Rechner zum Ausgeben der Koordinaten $X_j$ und $Y_j$ einer Szintillation j und der Energie $E_j$, die dieser Szintillation j zugeordnet ist, dadurch gekennzeichnet, daß

(A) die p Erfassungskanäle die Verstärkung, die Filterung und die Probenahme der Ausgangssignale der Photodetektoren, danach die Analog/Digital-Umsetzung der erhaltenen Proben und ihre Summierung sowie das Zuleiten von p digitalen Signalen zum Rechnereingang verwirklichen;

(B) der Rechner selbst folgende Elemente enthält:

(a) einen Bus zum Übertragen der p Digitalsignale;

(b) eine Digitalsummierstufe mit vier gewichteten Digitalsummiereinrichtungen, die ausgehend von den Ausgangssignalen der p Erfassungskanäle vier Digitalsignale $X_m$, $Y_m$, $Z_m$, $E_m$ ausgeben;

(c) eine Ereignisbearbeitungsstufe mit Entstapelungsberechnungsschaltungen und zwei Teilern, die ausgehend von den Signalen $X_m$, $Y_m$, $Z_m$, $E_m$ die drei Koordinaten- und Energiesignale x, y und E ausgibt;

(C) eine Detektions-, Folgesteuerungs- und Speicherstufe, die ein der Summe der p photodetektorausgangssignale entsprechendes Signal empfängt, zum Ausgeben einerseits der verschiedenen Taktsignale zum Synchronisieren der Elemente der p Erfassungskanäle und der Rechnerelemente und andererseits der Korrekturkoeffizienten für die Ereignisbearbeitungsstufe vorgesehen ist.

2. Szintillationskamera nach Anspruch 1, dadurch gekennzeichnet, daß die Ereignisbearbeitungsstufe vier Entstapelungsberechnungsschaltungen, die die betreffenden Digitalsignale $X_m$, $Y_m$, $Z_m$, $E_m$ empfangen und vier Signale $\hat{X}$, $\hat{Y}$, $\hat{Z}$, $\hat{E}$ ausgeben, und zwei Teiler enthält, die zwei Signale $x = \hat{X}/\hat{Z}$ bzw. $y = \hat{Y}/\hat{Z}$ ausgeben, wobei die drei Signale x, y und E durch die Ausgangssignale des ersten Teilers, des zweiten Teilers bzw. einer Zeitnachrichtungsschaltung gebildet sind, die das Ausgangssignal der vierten Entstapelungsberechnungsschaltung empfängt, und daß die Korrekturkoeffizienten Extrapolations- und Intrapolations-Korrekturkoeffizienten $\alpha$ bzw. $\gamma$ für die vier Entstapelungsberechnungsschaltungen der Ereignisbearbeitungsstufe sind.

3. Szintillationskamera nach Anspruch 2, dadurch gekennzeichnet, daß jede der vier Entstapelungsberechnungsschaltungen ein Subtrahierglied enthält, das an seinem ersten Eingang das Ausgangssignal der entsprechenden Umsetzungs- und Integrationsanordnung empfängt, und dem einerseits ein erster Multiplizierer und ein erstes Speicherregister und andererseits parallel zu diesem ersten Multiplizierer und dem ersten Register ein zweiter Multiplizierer und ein zweites Speicherregister nachgeschaltet sind, wobei der Ausgang dieses zweiten Registers mit dem zweiten Eingang des Subtrahierglieds und die zweiten Eingänge der ersten, bzw. der zweiten Multiplizierer mit dem Ausgang des Speichers des $\alpha$ - Koeffizienten, bzw. mit dem Ausgang des Speichers des $\gamma$-Koeffizienten gekoppelt sind.

4. Szintillationskamera nach Anspruch 3, dadurch gekennzeichnet, daß die Multiplizierer durch nur eine Multiplizierschaltung ersetzt sind, die einem Zeitmultiplexer/Demultiplexer zugeordnet ist.

5. Szintillationskamera nach Anspruch 1, dadurch gekennzeichnet, daß jede der drei ersten Entstapelungsberechnungsschaltungen ein Subtrahierglied enthält, das an seinem ersten Eingang das Ausgangssignal der entsprechenden Digitalsummierstufe empfängt, und dem einerseits ein drittes Speicherregister, dessen Ausgang der der Entstapelungsberechnungsschaltung ist, und andererseits parallel ein dritter Multiplizierer und diesem ein viertes Speicherregister nachgeschaltet sind, wobei der Ausgang dieses vierten Registers mit dem zweiten Eingang des Subtrahierglieds und der andere Eingang des dritten Multiplizierers mit dem Ausgang des Speichers des $\gamma$-Koeffizienten gekoppelt sind.

6. Szintillationskamera nach Anspruch 1, dadurch gekennzeichnet, daß die Ereignisbearbeitungsstufe drei Entstapelungsberechnungsschaltungen, zwei Teiler, eine Zeitnachrichtungsschaltung und eine zusätzliche Berechnungsschaltung enthält, wobei die zwei Teiler die Signale $X_m$, $Y_m$, $Z_m$, $E_m$ zum Ausgeben der Signale $x_m = X_m/Z_m$ und $y_m = Y_m/Z_m$ empfangen, die zwei ersten Entstapelungsberechnungsschaltungen die Signale $X_m$ und $Y_m$ empfangen und die Signale x und y ausgeben und die dritte das Signal $E_m$ empfängt und das Signal $\hat{E}$ ausgibt, und die zusätzliche Berechnungsschaltung einerseits das Signal $\hat{E}$ und andererseits die Korrekturkoeffizienten empfängt, um die ersten und zweiten Entstape-

16

lungsberechnungsschaltungen mit einem zusätzlichen Korrekturkoeffizienten $\Gamma$ zu beliefern.

7. Szintillationskamera mit einem Szintillationskristall, der ggf. mit einem Kollimator ausgerüstet ist und zum Umsetzen jedes empfangenen Photons in eine Szintillation dient, mit einem Lichtleiter zum Koppeln des Kristalls beim Eintrittsfenster mit einer Gruppe von p Photodetektoren zum Umsetzen jeder Szintillation in Strom, mit p analogen Erfassungskanälen zum Empfangen der Ausgangssignale der Photodetektoren und zum Ausgeben von p elektrischen Signalen, deren Charakteristiken insbesondere mit der Szintillationsintensität und mit dem Abstand dieser Szintillation zu jedem der Photodetektoren verknüpft sind, und mit einem Rechner zum Ausgeben der Koordinaten $X_j$ und $Y_j$ einer Szintillation j und der Energie $E_j$, die dieser Szintillation j zugeordnet ist, dadurch gekennzeichnet, daß

(A) die p Erfassungskanäle die Verstärkung, die Filterung und die Probenahme der Ausgangssignale der Photodetektoren, danach die Analog/Digital-Umsetzung der erhaltenen Proben und ihre Summierung sowie das Zuleiten von p digitalen Signalen zum Rechnerausgang verwirklichen;

(B) der Rechner selbst folgende Elemente enthält:

(a) einen Bus zum Übertragen der p Digitalsignale;

(b) eine Digitalsummierstufe mit drei gewichteten Digitalsummiereinrichtungen, die ausgehend von den Ausgangssignalen der p Erfassungskanäle drei Digitalsignale $X_m$, $Y_m$, $Z_m$ bzw. $X_m$, $Y_m$, $E_m$ ausgeben;

(c) eine Ereignisbearbeitungsstufe mit Entstapelungsberechnungsschaltungen und zwei Teilern, die ausgehend von den Signalen $X_m$, $Y_m$, $Z_m$ oder $X_m$, $Y_m$, $E_m$ die drei Koordinaten- und Energiesignale x, y und E ausgibt;

(C) eine Detektions-, Folgesteuerungs- und Speicherstufe, die ein der Summe der p Photodetektorausgangssignale entsprechendes Signal empfängt, zum Ausgeben einerseits der verschiedenen Taktsignale zum Synchronisieren der Elemente der p Erfassungskanäle und der Rechnerelemente und andererseits der Korrekturkoeffizienten für die Ereignisbearbeitungsstufe vorgesehen ist.

8. Szintillationskamera nach Anspruch 7, dadurch gekennzeichnet, daß die Szintillationsbearbeitungsstufe drei Entstapelungsberechnungsschaltungen, die die betreffenden Digitalsignale $X_m$, $Y_m$, $Z_m$ oder $X_m$, $Y_m$, $E_m$ empfangen und drei Signale $\hat{X}$, $\hat{Y}$, $\hat{Z}$ oder $\hat{X}$, $\hat{Y}$, $\hat{E}$ ausgeben, und zwei Teiler enthält, die zwei Signale x = $\hat{X}/\hat{Z}$ bzw. y = $\hat{Y}/\hat{Z}$ oder x = $\hat{X}/\hat{E}$ bzw. y = $\hat{Y}/\hat{E}$ ausgeben, wobei die drei Signale x, y und E durch die Ausgangssignale des ersten Teilers, des zweiten Teilers bzw. der Zeitnachrichtungsschaltung gebildet sind, die das Ausgangssignal der dritten Entstapelungsberechnungsschaltung empfängt, und daß die Korrekturkoeffizienten Extrapolations- und Intrapolations-Korrekturkoeffizienten $\alpha$ bzw. $\gamma$ für die drei Entstapelungsberechnungsschaltungen der Ereignisbearbeitungsstufe sind.

9. Szintillationskamera nach Anspruch 8, dadurch gekennzeichnet, daß jede der drei Entstapelungsberechnungsschaltungen ein Subtrahierglied enthält, der an seinem ersten Eingang das Ausgangssignal der entsprechenden Umsetzungs- und Integrationsanordnung empfängt, und dem einerseits ein erster Multiplizierer und ein erstes Speicherregister und andererseits parallel zu diesem ersten Multiplizierer und dem ersten Register ein zweiter Multiplizierer und ein zweites Speicherregister nachgeschaltet sind, wobei der Ausgang dieses zweiten Registers mit dem zweiten Eingang des Subtrahierglieds und die zweiten Eingänge der ersten, bzw. der zweiten Multiplizierer mit dem Ausgang des Speichers des $\alpha$-Koeffizienten bzw. mit dem Ausgang des Speichers des $\gamma$-Koeffizienten gekoppelt sind.

10. Szintillationskamera nach Anspruch 9, dadurch gekennzeichnet, daß die Multiplizierer durch nur eine Multiplizierschaltung ersetzt sind, die einem ZeitMultiplexer/Demultiplexer zugeordnet ist.

11. Szintillationskamera nach Anspruch 7, dadurch gekennzeichnet, daß jede der drei Entstapelungsberechnungsschaltungen ein Subtrahierglied enthält, das an seinem ersten Eingang das Ausgangssignal der entsprechenden Digitalsummierstufe empfängt, und dem einerseits ein drittes Speicherregister, dessen Ausgang der der Entstapelungsberechnungsschaltung ist, und andererseits parallel ein dritter Multiplizierer und diesem ein viertes Speicherregister nachgeschaltet sind, wobei der Ausgang dieses vierten Registers mit dem zweiten Eingang des Subtrahierglieds und der andere Eingang des dritten Multiplizierers mit dem Ausgang des Speichers des $\gamma$-Koeffizienten gekoppelt sind.

12. Szintillationskamera nach Anspruch 1, dadurch gekennzeichnet, daß die Ereignisbearbeitungsstufe drei Entstapelungsberechnungsschaltungen, zwei Teiler, eine Zeitnachrichtungsschaltung und eine zusätzliche Berechnungsschaltung enthält, wobei die zwei Teiler die Signale $X_m$, $Y_m$, $Z_m$ zum Ausgeben der

Signale $x_m = X_m/Z_m$ und $y_m = Y_m/Z_m$ beziehungsweise die Signale $X_m$, $Y_m$, $E_m$ zum Ausgeben der Signale $x_m = X_m/E_m$ und $y_m = Y_m/E_m$ empfangen, die zwei ersten Entstapelungsberechnungsschaltungen die Signale $X_m$ und $y_m$ empfangen und die Signale x und y ausgeben und die dritte das Signal $Z_m$ oder $E_m$ empfängt und das Signal $\hat{E}$ ausgibt, und die zusätzliche Berechnungsschaltung einerseits das Signal $\hat{E}$ und andererseits die Korrekturkoeffizienten empfängt, um die ersten und zweiten Entstapelungsberechnungsschaltungen mit einem zusätzlichen Korrekturkoeffizienten $\Gamma$ zu beliefern.

13. Szintillationskamera nach einem oder mehreren der Ansprüche 1 bis 12, dadurch gekennzeichnet, daß die Teiler durch nur eine Teilungsschaltung ersetzt sind, die einem Zeitmultiplexer/Demultiplexer zugeordnet ist.

14. Szintillationskamera nach einem oder mehreren der Ansprüche 1 bis 13, dadurch gekennzeichnet, daß die Entstapelungsberechnungsschaltungen durch nur eine dieser Schaltungen ersetzt sind, die einem Zeitmultiplexer/Demultiplexer zugeordnet ist.

15. Szintillationskamera nach einem oder mehreren der Ansprüche 1 bis 14, dadurch gekennzeichnet, daß eine Amplitudenablehnschaltung zum Verringern der Anzahl zu behandelnder Ereignissen vorgesehen ist.

16. Szintillationskamera nach einem oder mehreren der Ansprüche 1 bis 15, dadurch gekennzeichnet, daß mit FIFO bezeichnete Speicher am Ausgang jedes der p Erfassungskanäle angeordnet oder jeder der gewichteten Digitalsummiereinrichtungen vorgeschaltet sind.

17. Szintillationskamera nach einem oder mehreren der Ansprüche 1 bis 16, dadurch gekennzeichnet, daß der Bus dem Rechner zugeordnet ist, ohne darin aufgenommen zu sein.

18. Szintillationskamera nach einem oder mehreren der Ansprüche 1 bis 17, dadurch gekennzeichnet, daß jede gewichtete Digitalsummiereinrichtung eine Reihenschaltung aus einer ersten Formgebungsschaltung, die die Digitalsignale sequentiell empfängt, denen man eine gewichtete Summe geben will, aus einer Bearbeitungsschaltung, einem Digitalmultiplizierer, der an seinem ersten Eingang das Ausgangssignal der Bearbeitungsschaltung empfängt, einem Addierer/Akkumulator für die aufeinanderfolgenden Ausgangssignale des Digitalmultiplizierers, und einer zweiten Formgebungsschaltung zum Ausgeben der Ausgangssignale der gewichteten Digitalsummiereinrichtung enthält, wobei die Bearbeitungsschaltung von einem Taktsignal gesteuert wird, das den Erscheinungsrhythmus der Digitalsignale am Eingang der Einrichtung festsetzt, der Bearbeitungsschaltung ein Digitalregister zugeordnet ist, das ihr einen ggf. änderbaren Schwellenwert zuführt, und der Digitalmultiplizierer an einem zweiten Eingang das Ausgangssignal eines Digitalspeichers zum Ausgeben der Gewichtungskoeffizienten zum Beeinflussen der Digitalsignale empfängt.

19. Szintillationskamera nach Anspruch 18, dadurch gekennzeichnet, daß der Digitalspeicher einen ROM-Speicher ist.

20. Szintillationskamera nach Anspruch 18, dadurch gekennzeichnet , daß der Digitalspeicher einen RAM-Speicher ist, dem eine zusätzliche Koeffizientenänderungsschaltung zugeordnet ist.

21. Szintillationskamera nach Anspruch 20, dadurch gekennzeichnet, daß die zusätzliche Koeffizientenänderungsschaltung eine Druckverdrahtung ist.

22. Szintillationskamera nach Anspruch 20, dadurch gekennzeichnet, daß die zusätzliche Koeffizientenänderungsschaltung eine mikroprogrammierte Schaltung wie z.B. ein Mikroprozessor oder ein Mikrocomputer ist.

FIG.1

FIG.3

FIG.2

FIG.4

FIG.5

FIG.6

FIG.8

FIG.7

FIG.9

FIG.10

FIG.11

FIG.12

FIG.13

FIG.14

FIG.15

FIG.16

FIG.17

FIG.18